(19) Europäisches Patentamt

European Patent Office

Office européen des brevets

(11) EP 0 753 606 B1

(12) EUROPEAN PATENT SPECIFICATION

(45) Date of publication and mention
of the grant of the patent:
**21.03.2001 Bulletin 2001/12**

(21) Application number: **96660032.2**

(22) Date of filing: **20.06.1996**

(51) Int Cl.[7]: **D01F 1/02**, D01F 1/10,
D01D 5/088, D01D 10/02,
D04H 1/54, D04H 3/14,
D04H 5/06, C08J 5/18,
C08K 3/00, C08K 5/00,
D01F 6/04
// C08L23:12, C08L23:00

(54) **Method of regulating the internal transport of adjuvants and additives of a polymer**

Verfahren zum Regulieren des internen Transports von Polymerzusätzen

Méthode pour régler le transport interne d'adjuvants et additifs d'un polymer

(84) Designated Contracting States:
**AT BE CH DE DK ES FR GB GR IE IT LI LU MC NL
PT SE**

(30) Priority: **03.07.1995 FI 953288**

(43) Date of publication of application:
**15.01.1997 Bulletin 1997/03**

(73) Proprietor: **J.W. SUOMINEN OY
SF-29250 Nakkila (FI)**

(72) Inventors:
• **Mäkipirtti, Simo
29250 Nakkila (FI)**
• **Ojanen, Marja
32700 Huittinen (FI)**
• **Bergholm, Heikki
00340 Helsinki (FI)**

(74) Representative: **Grew, Eva Regina et al
Oy Jalo Ant-Wuorinen Ab
Iso Roobertinkatu 4-6-A
00120 Helsinki (FI)**

(56) References cited:
EP-A- 0 244 821          EP-A- 0 391 438
EP-A- 0 516 271          EP-A- 0 667 406
US-A- 3 664 981          US-A- 3 665 059
US-A- 3 689 597          US-A- 4 857 251

# EP 0 753 606 B1

**Description**

The method according to the invention is directed to regulating the quantitative proportions of adjuvants and additives to be blended in a molten polymer in order to impart various properties to the solidified polymer product, their mechanisms, paths and rates of movement in the polymer matrix and their matrix position.

Adjuvants and additives to be blended into a polymer are used *i.a.* for the modification of the surface properties of filaments, foils and moulded products. By using suitable fatty amides, fluoro-aliphatic groups containing compounds, and complex organopolysiloxanes, the wettability, the frictional, working and treatment characteristics of the polymer surfaces can be regulated within broad limits. In this way it is possible to impart desired touch-dry and adsorption characteristics to non-woven products made from various synthetic fibres. For example, a finishing layer applied externally to a polyolefin sur-face in a fibre making process can be destroyed in the further fibre processing, whereby the stripped natural hydrophobic polymer surface is unsuitable for many non-woven products. When bonding fibres i.a. using the water needling method, the high-energy water jets immediately release the surface finishing layer. Internal finishing of the polymer is in such a case a beneficial way of providing the polymer surface with a new finishing layer in place of the destroyed, for example in connection with the drying operation following the needling process. It is thus possible to use double finishing, whereby a suitable anti-static surface finishing can be used i.a. for carding and water needling, and for the end product a suitable internal finishing can be used. It can be mentioned that many additives used for the modification of polymeric surfaces and also for protection against oxidation are incompatible with the polymer matrix and have only a low solubility therein, which properties increase the surface activity of these agents and at the same time the problems they cause in use. Various antioxidants are blended into a polymer in order to protect it against autogenous oxidation induced by high energy radiation or heat energy. When the polymer melt solidifies, a redistribution of the additives takes place therein, whereby a cloud of contaminants comprised of additives (also oxidized polymer radicals) advances in front of the spherulite border. An antioxidant poor area thus remains within the spherulite which, depending on the return diffusion, is prone to autogenous oxidation. Thus a regulation of both the quantity and position of the antioxidant component has to be made in fibres intended for gamma-sterilization, water needling and also thermobonding. In the same manner, the additive distribution has to be controlled when dying the polymer and *i.a.* when blending therein inorganic reinforcing agents.

The object of the invention is to provide a method for the regulation of the properties of products made from a synthetic polymer, such as the surface properties, the autogenous oxidation initiated by various excitation energy forms, the thermal properties, dying and/or strength.

The invention relates to a method for regulating the physical and chemical properties of products made from a synthetic polymer, especially polypropylene, such as fibres, non-woven fabrics made therefrom, films and moulded bodies, by regulating the polymer matrix structure, and the matrix position, rate and path of movement of additives and adjuvants blended therein, wherein

a. the extruded or moulded polymer melt is quenched to obtain a structure where the smectic + amorphous phase system, or smectic + amorphous + monoclinic phase system is stable, the quenching taking place at a rate of $\dot{T}_{90\,C} \geq 50$ °C/s, to a quenching temperature of $\vartheta < 50$ °C, and

b. after quenching, the monoclinic degree of crystallinity of the polymer matrix is increased by regulating the heating time and temperature so that, after heating, the amorphous + smectic phase portion contains separated polymer-blended additive corresponding to supersaturation, the heating temperature being below the mobilisation temperature of the polymer crystalline phase, that is the temperature corresponding to the maximum value for the dynamic loss module, i.e. below $\vartheta = 150$ °C,

the amorphous layer thickness of the quenched polymer matrix being regulated by regulating the values for the long identity period and the degree of crystallinity, by regulating the heating time and temperature within the temperature range defined by the said quenching temperature and the temperature corresponding to the minimum of the amorphous layer thickness, without exceeding the temperature at which the return diffusion of the said separated additive into the amorphous + smectic matrix phase portion starts.

Preferred embodiments are described in the subclaims.

Thus, in the regulation method according to the new invention, the state of movement and position in the polymer matrix of the polymer melt blended adjuvants and additives are regulated during the various processing stages of the polymer. The regulation method is based on a central controlled regulation of the super- and substructures of the solidifying and solid polymer matrix and the solubility, rate of movement and surface characteristics of the adjuvant and additive components. The regulation method requires *i.a.* a control of the following partial functions:

- the superstructure function of the polymer matrix: is a function of *i.a.* the rate and temperature of solidification of the melt, tension in spinning and the processing conditions (draw ratio, temperature, time) of the solid phase

- the substructure of the polymer matrix:
  comprises in this discussion the smectic structural function, the crystallinity function and the long identity period function forming the basis for the lamellar thickness, which are functions of both melt solidification rate, time and temperature
- orientation, solubility and diffusion functions:
  are functions of the structure of the polymer matrix, time and temperature.

The use of these partial functions in the new regulation method is qualitatively the following:
A polypropylene melt is quenched at a high speed, whereby, in addition to the amorphous phase, a smectic phase, either alone or, depending on the quenching speed, in addition a monoclinic crystalline phase is obtained in the structure. During quenching the amorphous + smectic phase dissolves from the blended additive an amount corresponding to the equilibrium of saturation, and the excessively blended portion separates and is isolated as the polymer solidifies. During heating of the quenched polymer, the smectic phase is transformed into a monoclinic crystalline phase, the amorphous phase quantitatively decreasing at the same time. The increase in the degree of crystallinity has been found to be very rapid as a function of the increase in temperature and slow as a function of time. The growth function for the crystallinity degree is split into two time functions because of the said phase transformation. The magnitude of increase of the degree of crystallinity is also dependant on the proportion of monoclinic phase in the matrix after quenching. The "dissolved" additive concentration corresponding to the quenching temperature starts to decrease under the effect of temperature excitation, whereby additive is released as a finely divided discharge. The released additive in the amorphous matrix will be subjected to the internal pressure of the matrix as the degree of crystallinity increases, whereby the "free" additive is "extruded" and migrates along the spherulite borders and amorphous lamellar borders to the polymer surface (atomic force microscope observations). The pressure in the system increases even further as the migration path for the additive narrows down, which is due to the decrease in the amorphous lamellar thickness, toward a minimum in a temperature range, which is dictated both by the increase in the degree of crystallinity and the long matrix identity period in accordance to different time and temperature functions. The internal pressure of the system causes, in addition to the extrusion along the spherulite borders, a decrease in the thermal activation energy of the diffusion migration of the additive, following Fick's law, whereby the efficiency of the diffusive material transport is greatly improved. When the solubility limit of the additive in the polymer matrix is passed as the heating temperature increases, the discharged additive begins to redissolve in the amorphous part of the matrix. Within the same temperature range, the amorphous thickness begins to increase again after passing the minimum. As a third phenomenom, also the so-called crystalline mobilisation starts in the said temperature range, whereby under the influence of stress relaxation also "the driving force" of the additive migration disappears as regards the pressure effect. The variations in the additive surface concentration caused by the described changes in the polymer matrix appear as completely corresponding variations *i.a.* in the wetting angles defining the surface characteristics (wetting, friction) of the polymer samples. In this context especially the mechanical drawing stage following the quenching of the polymer is to be taken into consideration, resulting in a deformed spherulite structure in the polymer matrix and correspondingly a microfibrillar structure when using high draw ratios. Each structure can be controlled both as regards the spherulite size and deformation by means of the drawing and heat treatment in the manufacturing stage. It is hereby possible to regulate especially the direction of the spherulite borders and the amorphous lamellar borders and thus effectively affect the length and direction of the migration distance of the additive. It is further to be noted that the structural functions of the polymer discussed above can be regulated independently of each other within wide limits. Furthermore, the time and operational limits of the various functions can be shifted through suitable additive choice (solubility, diffusion and nucleating effect) as well as blending concentration. The method claims also characterize well the structure and operational limits of the new regulation method.

Undoubtedly many methods are disclosed in the extensive patent and technical scientific literature which have points in common with the regulation method according to the invention. The extensive elucidation of the prior art of some of the patent publications is also noteworthy. A major part of the literature relates, however, to the structures and manufacture of additives. The behaviour of the additive in the polymer matrix is considered only sparsely. In this connection some statements in the literature as to the movements of the additives in the polymer and the effect of the heat treatment thereon, will be examined.

N.L. Jarvis /1-2/ examines the effect of partly fluorinated additives on the wetting of solid polymers. It is observed that re-finishing of the surface is dependent on the additive diffusion rate in the polymer matrix and this can be accelerated by heating the polymer or by lowering its viscosity in some other way. Due to the slowness of the diffusive movement, it is difficult to find suitable surface active additives.

D.K. Owens /3/ examines the effect of fatty amides as reducers of the friction of polymer films. In the study it is observed that the diffusion is controlling as regards reducing the friction at low temperatures for stearamide ($\vartheta < 65$ °C) and that at high temperatures, the surface evaporation of the amide surpasses the diffusion effect.

N. I. Palmer /4/ manufactures isolating fabrics for batteries using a melt-blown-process and internal finishing of the fibres. In order to improve the effect of the wetting agent and to obtain a finely divided, high degree of porosity, the product fabric is subjected to pressure calandering (p = 0.7 bar) at high temperature (just before melting: $\vartheta$ = 138-160 °C).

B. C. Oxenrider /5/ produces, using internal finishing and compounds containing 1-4 fluoroalkyl groups as finishing agents, polyamide and -ester filaments for soil and stain rejection. In the method specification it is mentioned that by heat treatment ($\vartheta$ = 120-150 °C, t = 2-4 hours) it is possible to reduce the effect of the additive which already as such concentrates to the surface, that is the surface energy of the filaments, which means that the agent is capable of migrating to the surface.

M. Sugimoto /6/ uses internal finishing when making packaging films in order to improve the adhesion strength and the transparency and to remove bubbles. In order to bring about the synergy of the additives, the heat treatment of the product takes place in the range, $\vartheta$ = 80-120 °C (polyethylene) at a delay time, t = 120-2 s.

G.H. Meitner /7/ manufactures, using melt-blown-technique, oil and water adsorbing towel fabric material containing finished microfibres. The fabrics are subjected to so called embossing at a temperature, $\vartheta$ = 82-124 °C, p = 1.4 bar, primarily to improve strength. Finishing agent is thus not transported inward nor outward from the polymer surface.

D. Duchesne /8/ uses fluorinated polymeric blends which apparently segregate to the surface during extrusion for the removal of melt imperfections in the product.

L. H. Sawyer /9/ adds surface active additives directly to the basic resin. These surface active agents migrate to the surface of the manufactured fibre. The wetting stability can be controlled by the composition and concentration of the additive combination.

G. A. Gardiner /10/ and R. S. Nohr /11/ include in their invention description an extensive and chronological study of the state of the art as regards internal finishing additives containing fluoro- and poly-siloxane chemicals. In the test runs of the examples of this invention description relating to the new regulation method, chemicals described in said publications have been used as internal finishing additives.

G. A. Gardiner /10/ manufactures from a blend of a thermoplastic polymer (*i.a.* polyolefins and -amides) and a non-ionic compound containing a fluoroaliphatic group (1-15 % by weight of FC) fibres with a stable hydrophilic surface. There is thus always sufficiently fluorochemicals present on the fibre surface to make it permanently hydrophilic. It is believed that the chemical inside the fibre acts as a reservoir of internal wetting agent. The fluorochemical comprises a three-part compound, where the first part is a saturated monovalent fluoroaliphatic group (40-78 % by weight F), the second part is a heteroatom containing (-S-, -O-, -NR-groups or combinations) linking group between the end groups and the third part is a non-ionic water soluble polyoxyalkylene group. The test runs in the examples of the specification were carried out using melt-blown-technique and the obtained microfibres were bonded directly to the corresponding non-woven product. The most important test polymers had a fairly high melt index. In the description of the invention the obtained test results were experimentally compared to polysiloxanes falling under the scope of the method /11/ and it was proved that the fluorochemicals functioned better and also at lower additive concentrations than *i.a.* the chemicals of the Silwet group, which require thermal excitation. It is to be mentioned that in order to obtain the 'permanently' hydrophilic surface, the used high melt index polymers, the microfibres, the high melt temperature and the high "melt delay time" in blowing, are especially favourable, as the necessary sur-face concentration has to form in the molten state due to the low diffusion rate of the sterically complicated, high-molecular additives.

R.S. Nohr /11/ uses for the internal finish structurally complicated surface active polysiloxanes. The additives have two parts, the first one containing at least one tetrasubstituted disiloxanyline group associated with one or more trisubstituted silyl and siloxy group, the substituents being independently chosen from monovalent alkyl, cycloalkyl, aryl and heterocyclic groups and the second part being a long-chain oxyalkylene containing group. The second part of the additive has at least one functional group which improves at least one property of the polymer (*i.a.* the $H_2O$ wettability oxyalkylene group, hydrophobicity: perfluoro-hydrocarbon group, light-, actinide and $\gamma$-radiation stabilization: polyalkyl substituted piperidyl group). Both parts of the additive cooperate as one molecular unit which is compatible with the polymer at the melt extrusion temperature, but incompatible below this temperature. The additive (1-12 % by weight) separates when the polymer melt solidifies, as a globular dis-charge, the particulate nature of which can be improved by using high shear rates in the nozzles. In order for the additive to segregate to the polymer surface sufficient "melt-time" is needed, which is achieved *i.a.* through choice of apparatus and adjustment of the capacity of the apparatus. The non-woven product made from the fibres is heated in the temperature range, $\vartheta$ = 27-95 °C for a sufficient time to allow for the migration of the additive to the fibre surface.

In the invention description /11/ the process for internal finishing is adapted to take place as a spun-bonding process, but also melt-blown- and other processes can be used. Surprising in the description is, however, *i.a.* the fact that the segregation heating of the said non-woven fabric takes place at a rather low temperature (27-95 °C), but no reference is made to the preceding high temperature range (145-165 °C) necessary for the thermal bonding, with associated effects. It is also evident that the said microdrops require for migration or re-formation by diffusion an infinite time when the polymer is in the solidified state. The material content of the very finely dispersed microdrop network opening up in the polymer surface or located immediately adjacent the surface, can, as a result of the combined effect of space and surface diffusion, spread to the polymer surface and can also be quantitatively sufficient for the small amount needed in a monomolecular layer.

The realization of the new regulation method under review is to a major part determined by the apparatus used. For this reason, the operational functions of the apparatus have been described in the examples of the description of the invention. A review of the water needling and thermal bonding methods for non-woven fabrics, and of fibre manufacturing processes, is available *i.a.* from the publications F.J. Evans /12/, B.V. Falkai /13/ and M. Ahmed /14/.

The regulation method according to the new invention can be described in a more quantitative way than before by means of the appended examples 1., 2. and 3.

Example 1

In example 1., the basic principles for the new invention and the essential observations relating thereto are shown by means of detailed subexamples.

Subexample 1.1

In subexample 1.1, the functional equations for the fibre production and water needling apparatuses used in the process development according to the examples of the description of the invention, are disclosed.

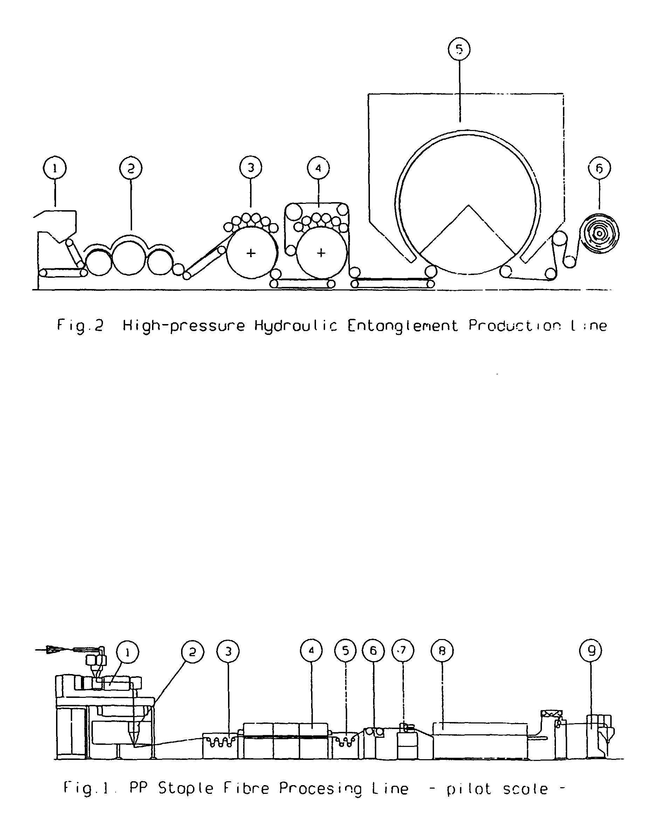

In the production of the fibre sample series used in the description of the method according to the new invention, the pilot scale spinning-drawing-apparatus shown in Figure 1 was used. The number of nozzles in the nozzle plate of the spinning device was 30500 and the nozzle diameter 0.25 mm. According to measurements carried out, the capacity of the apparatus ($P$, kg/h) was a function of the rotational speed of the pump ($n_r$, min$^{-1}$) of the form

$$P = 2.0437 \times n_r. \hspace{3cm} /1/$$

The velocity of the polymer in the nozzle is correspondingly of the form

$$(v_s, \text{m min}^{-1})$$

$$v_s = 2.5111 \times 10^{-2} \times n_r. \hspace{3cm} /2/$$

In the measurements carried out for the method usually a rotational speed of the polymer pump of $n_r = 15.15$ was used, whereby the spinning capacity and the nozzle speed were correspondingly:

$$P = 30.96 \text{ and } v_s = 0.3804.$$

In the apparatus shown in Figure 1, the speed of the 2-godet and the fibre gauge ($v_2$ and $d_2$: Fig. 1: 5) were usually kept constant in the test series ($v_2 = 90$ and $d_2$ 2.2 or 1.7). In some cases the speed of the 1-godet of the apparatus was kept constant, whereby at constant product gauge, the capacity of the apparatus varied.

The other parts of the spinning-drawing apparatus diagram (Figure 1) are: 1. extruder, 2. melt spinning device, 3. 1-godet, 4. drawing oven, 5. 2-godet, 6. 2-finishing (avivage), 7. crimping device, 8. stabilizing and drying oven and 9. staple fibre cutter.

Figure 2 shows schematically a water needling production line. The parts of the apparatus are: 1. fibre feeder, 2. carding apparatus, 3. and 4. water needling stations, 5. drying oven and 6. fabric winding.

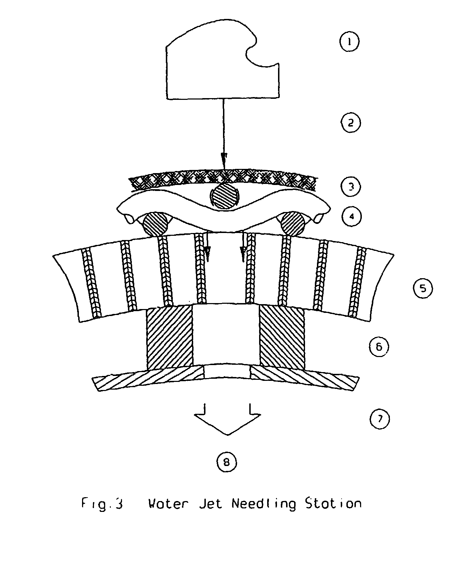

In the water needling test series on a pilot scale, a needling station analogous to a production apparatus was used (Fig. 3), where the needling took place as a surface needling. The web-wire-honeycomb system (Fig. 3: 3, 4, 5) of the needling station is made movable in two directions at adjustable speed with respect to the nozzle bar (Fig. 3: 1, 2) and the suction device (Fig. 3: 6, 7).

The strength of water needled fabrics is proportional to the water jet energy received by the web, that is proportional also to the jet energy developed by the apparatus. From the experimentally measured jet scattering values due to nozzle speed and disturbance factors, the nozzle effect ($P_L$, w/m$^2$) as a function of the pressure difference ($\Delta P$, bar) and nozzle distance ($L$, mm) per unit width of the nozzle bar (m) is obtained

$$P_L = 14.70 \times 10^5 \times (\Delta P)^{1.068} \times L^{-0.5}. \hspace{2cm} /3/$$

By introducing the number of nozzles (1557 per m), the area of the nozzle opening (0.127 mm) and the speed of the web ($v_r$, m/s) into the equation, one obtains a value for the jet energy (w, ws/m$^2$) directed against the fabric per unit area (m$^2$) of the fabric

$$w = 28.99\ [\Delta P]^{1.068}\ L^{-0.5}\ v_r^{-1.0}. \hspace{2cm} /4/$$

In the test series used for the method, a wire speed of $v_r$ = 10.9 m/min was used. In the pre-needling of the web, a pressure series of P = 30-60-80 bar was used and the a wire size 92 x 100 mesh, and in the final needling a pressure series of P = 30-60-100 bar and a wire size 22 x 24 mesh.

It is further to be noted that in the test examples concerning thin films, a quenched planar film of ordinary production quality was used. Part of the additive containing, rapidly quenched film samples used in the example tests were prepared under highly controlled conditions in a Haake-Rheocord 90-apparatus system, which also was equipped with a drawing apparatus and an oven.

Subexample 1.2

This subexample examines the polypropylene matrix and surface structures and the conditions for their formation, which are important for the realization of the new regulation method.

In the initial stage of processing (moulding, extrusion, spinning) the superstructure formed when cooling the polymer melt is comprised of spherulites, deformed spherulites or microfibrils. The substructure of the formed spherulite structure is a strong function of both the cooling rate and the quenching temperature /15-20/. At low quenching temperatures (-70°/+20°C) and/or high cooling rates ($\dot{T}_{90}$, (°C/s)), at the temperature relevant for the structure (90°C): $\dot{T}_{90}$ > 150, the structure formed in the polymer matrix is bi-phasic: amorphous phase (am) and smectic phase (sm). When the quenching temperature is high (100-120 °C) and/or the quenching rate is low: $\dot{T}_{90}$ < 20, a bi-phasic structure is obtained in the polymer matrix: amorphous and monoclinic crystalline (a) phase. In the intermediate range between these quenching temperatures and rates (defined by chain orientation and other structural factors of the polymer) there is tri-phasic structure in the polymer: amorphous, smectic and monoclinic crystalline phase. Of the phases appearing in the spherulite structure, the amorphous and the monoclinic crystalline phase are structurally known, but the structure of the smectic phase has not been sufficiently elucidated.

In addition to the smectic package, named smectic here, (where a long-range order exists only in the longitudinal direction) this phase is treated in the literature also as a paracrystalline (the edges of the unit cell vary statistically both to position and length) and as a highly defect rich microcrystalline phase. The microcrystalline phase is assumed to be of hexagonal (3-, monoclinic $\alpha$- or trigonal $\gamma$-crystal structure.

In this study the smectic phase /15-18/ is considered to be a highly disorganized, unstable structure present in both unoriented and in rather highly chain oriented structural systems. The rather dense smectic phase does, however, distinguish from the amorphous phase as strictly separate areas (domains) of their own and it may dissolve various additives to a much lesser degree than the amorphous phase. According to measurements, the transition: smectic -> $\alpha$-monoclinic takes place above a specific limit temperature (a function *i.a.* of the chain orientation), as a thermally activated process at the temperature range of 60-120 °C.

The effect of the polymer melt temperature on the nucleating temperature, spherulite formation through athermal nucleation and isothermally constant radial growth rate and the adaptation of the Avram theory for monitoring total crystallinity, is very well known and controllable for each polymer /23/. It is necessary to control the kinetics of spherulite formation and corresponding regulation possibilities, when technically carrying out melt spinning and film formation as well as quenching.

The distribution of additives and contaminants in a polymer crystallizing in spherulite form, which is relevant from the point of view of the regulation method, will be briefly examined. The distribution process is almost analogous to the zone-refining process. Non-crystallizing additives and contaminants rejected by the spherulite borders are pushed as a wave in front of the growing spherulite, leaving behind a lower concentration in the spherulite than in the original melt. In a partly crystallized and quenched sample it is possible to demonstrate /21-22/ a high and even additive concentration in an area which was molten prior to quenching, a low concentration in the center of a spherulite and a very high concentration at the spherulite border. A reverse diffusion (grain boundary -> spherulite) takes place, but in the solid state it is slow as compared to melt diffusion. The solubility of the additive in the polymer melt generally decreases substantially when the melt solidifies (as an example, the surface chemicals of subexample 1.5), whereby the additive separated either in molten or in solid form is pushed in front of the growing spherulite and is enriched on the inter-spherulitic border surfaces. As the melt solidifies, also the polymer contaminants are redistributed. For example the chain fragment radicals oxidized during processing of the polymer melt are pushed in front of the spherulite surface and are enriched on the spherulite border. Thus initiation points for autogenous oxidation are formed on the border surfaces and the antioxidant poor interior amorphous part of the spherulite starts to degrade rapidly.

In fibre and (film) manufacture, melt spinning and drawing affect the spheroid dimensions of the polymer structure and their substructures. In a completely undeformed polymer matrix the spherulite is spherical. The crystals separated by amorphous portions grow in the form of fibrils radially so that the direction of the most rapidly growing a-axis is parallel to and correspondingly the direction of the c-axis (as also the chain helix axes) is perpendicular to the direction of the radial fibrils. The radial fibril interstices are filled with a randomly oriented crystalline phase without long-range order, and an amorphous phase. In melt spinning, the normal forces of the nozzle walls and the cooling under stress transform the spherulite into a short ellipsoid, the long axis of which is perpendicular to the drawing axis. The substructure will be oriented so that the crystal lamellae at the polar areas are oriented along the a-axis with respect to the drawing direction, and at the equatorial area they are oriented in the c-axis. These areas are separated by sharp (an angle of appr. 30° with respect to the fibre axis) border surfaces. When spinning fibres are drawn slightly (drawing ratio, $\lambda < 2.5$) the spinning ellipsoid is transformed almost into a spheroid. Part of the a-axis oriented crystal lamellae of the polar areas are inclined, whereby this area is reduced and the c-axis oriented equatorial area grows. At the same time, the border surfaces between the areas become diffuse. When stabilizing thermally and isometrically slightly drawn fibre above the crystal mobilisation temperature ($T_{\alpha c}$: the temperature of the maximum value of the dynamic loss module), the long axis (perpendicular to the drawing direction) of the ellipsoid becomes longer and the radial nature of the crystal lamellae of the equatorial areas disappears and the c-axis orientation of the lamellae is in the direction of the fibre axis. When spinning fibres are drawn strongly ($\lambda > 2.5$), the spinning ellipsoid is deformed in the drawing direction so that its long axis becomes parallel to the drawing direction. The a-axis oriented area of the crystal lamellae disappears completely (there being, however, intermediate orientation adjacent the long axis). The least mobile crystal lamellae of the equatorial areas are strongly oriented in the c-axis direction (as also the chain helix axes). Isometric thermal stabilization above the said $\alpha_c$-absorption temperature leads to the disappearance of the deformed spherulite structure in the matrix and to its substitution with a microfibrillar superstructure, wherein the c-axis of the crystal lamellae are oriented in the direction of the drawing axis.

The movement of foreign additive molecules in the polymer takes preferentially place along disorganized, low-density, amorphous lamellar borders. The movement of the molecules is thereby governed by the lamellar thickness, the lamellar orientation in the direction of the concentration gradient of the substance, the imperfections of the lamellar borders. A randomly oriented, undrawn polymer matrix is comprised of spherically symmetrical spherulite areas, the lamellar borders being to a substantial degree parallel to the surface. Consequently the migrating additive molecules are forced to move along non-linear, often very complicated paths, the speed of movement decreasing substantially in the direction perpendicular to the surface. Effective quenching of a moulded article (*e.g.* in a chill mould), a monofilament or a film surface (liquid or cooled air), establishes a sufficiently big temperature gradient in the direction perpendicular to the surface which prevents the nucleation in the interior parts of the polymer product. The cooling conditions thus lead to the formation of a surface layer area distinguishable from the interior parts of the polymer. This layer is formed of asymmetrical spherulites of an often submicroscopic cross-section, having a substantial number of nuclei which are close to the surface and a dimension (long axis) which in the direction of the normal to the surface is very big (50-100 μm). In this surface layer, the broadest lamellar dimension is directed perpendicularly to the surface, the lamellar borders are straight and long, the additive migration in the direction of the normal to the surface (direct path of movement) being rapid.

The solidification of polypropylene and the formation of its structure under production scale type conditions in a fibre spinning and drawing apparatus (Fig. 1) according to the subexample 1.1, is briefly examined. In the test series 82A and 82B, the propylene polymers I and II were used so that the polymer II was blended in an amount of 3 % by weight into the polymer I as a plasticizer. The melt indexes (MFR: ASTM D 1238:230°C/21.6 N), weight and number average molecular weights ($M_W$ and $M_n$) and distribution ratio (R) were respectively (I/II) the following MFR: 19/420, $M_w$: 192700/98400, $M_n$: 48100/22150 and R: 4.01/4.44. The testing conditions and the most important test results are given in the Table 1. The capacity and nozzle speed values are given in the subexample 1.1.

The fibres of test series 82 have a deformed spherulite superstructure at an average chain orientation value up to fav ≤ 0.76, after both spinning and drawing (the fav-value is obtained from the elongation/orientation function of Table 1), and above this fav-value, a microfibrillar superstructure in drawn structures. The result corresponds to the structural observations made earlier. When performing the test series 82, the manufacturing conditions for the spinning fibres were chosen so as to obtain, in both test series (A and B), a spinning fibre series, wherein the crystallinity varied from a high α-monoclinic crystallinity degree (WAXS) to a smectic structure with a low crystallinity degree. The spinning process was regulated by regulating the spinning speed (Table 1), the fibre gauge (the final draw gauge in the fibres of all the test series was 2.2 dtex and thus corresponding to the draw ratio for the spinning fibres) and the quantity of cooling air (appr. 1000 Nm$^3$) and its temperature ($\vartheta < 20°C$).

In the test series 82A and 82B, respectively, the logarithmically parallel functions

$$\chi = 826.10 \text{ fav}^{4.611} \text{ and } \chi = 580.91 \text{ fav}^{4.611} \qquad /5/$$

simulate the measurement values for the degree of crystallinity of the spinning fibres. Thus in the test series A, when the chain orientation value (fav) increases as a function of the spinning draw ratio ($\lambda_K$), the degree of crystallinity ($\chi$) decreases: $\lambda_K$/fav/$\chi$: 79/0.413/(14) smectic -> 189/0.540/48.2. In the equation for the test series B, the power function part is the same as for the test series A, but the values for the degree of crystallinity are lower in the series B than in the series A. In the fibre samples of the test series 82A, where the spinning speeds (Table 1) and thus also the residence time of the filaments in the cooling zone are constant, the heat transfer rates decrease when the spinning fibre gauge increases, and thus the crystallinity values decrease when the spinning draw ratio decreases. In the test series 82B, for gauge values corresponding to those of the test series 82A, the residence time of the filaments in the cooling zone, as well as the heat transfer decrease, wherefor the degree of crystallinity remains below the corresponding values of the 82A series. When making fibre with a final gauge of 1.7 dtex using spinning speeds and cooling residence times corresponding to those of the test series 82B, the feed rate has to be decreased ($n_r$: 15.15 -> 11.69 min$^{-1}$). An increase in the degree of crystallinity is thus obtained resulting from the increased heat transfer due to decrease in the spinning fibre gauge (and the increase of the spinning draw ratio)(for example test series 109A (2.2 dtex):

$$\lambda_K/\chi \sim 189/51.3 \text{ and } 109B \text{ (1.7 dtex): } \lambda_K/\chi = 247/59.7).$$

Drawing of a spinning fibre (the set temperature of the drawing oven was 80°C) leads to an even lower degree of crystallinity of the fibre. In the test series 82A and 82B, the following equations simulating the degree of crystallinity of draw fibre are obtained

$$\chi = 8.609 \text{ fav}^{-3.164} \text{ and } \chi = 6.978 \text{ fav}^{-3.164} \qquad /6/$$

When the orientation increases, the degree of crystallinity thus decreases (series 82A): $\lambda$/fav/$\chi$: 1.25/0.598/43.8 -> 3.00/0.870/(14) smectic. In the test series 82B, the decrease in the degree of crystallinity of the spinning fibre caused by drawing as a function of average degree of orientation, is of a similar form as in the series 82A, but lower than this. Both free and isometric heat treatment (120°C/15 min) of the draw fibres of the test series 82A leads to approximately the same equation for the degree of crystallinity

$$\chi = 29.035 \text{ fav}^{-1.342} \qquad /7/$$

Thus the degree of crystallinity decreases when the average orientation factor increases, but due to the change in the power function part, to a lesser degree than the values for the draw series (series A: $\chi$:56 -> 35 % for an orientation range corresponding to that of the draw fibre).

It is to be noted in this context that an even more complicated structural system is obtained from a smectic spinning fibre after drawing. Especially at low values for the degree of crystallinity, the almost linear change of the SAXS scattering intensity value as a function of the degree of crystallinity, has been used for the determination of the degree of crystallinity, in addition to the WAXS system.

Based on these few examples the observation can be made that the regulation of the degree of crystallinity can easily be carried out technically in an ordinary production apparatus over the whole crystallinity range.

Subexample 1.3

In this subexample the rate of crystallinity change is examined as function of temperature and time.

The equations regarding the change of crystallinity degree ($f_c$-fraction) measured for the quenched polymers according to the subexamples studied, as a function of temperature (T, K) and time (t, min) have been compiled in the Table 2.

In the structural system of the polymer under study in this subexample (Table 2: A-2), the equations corresponding to crystallization time values above and below the intersection point of the equations simulating the degree

of crystallinity are

$$f_c = 3.4876 - 2343.06/RT + 2.258 \times 10^{-2} \ln t \qquad /8/$$

and

$$f_c = 2.1984 - 1340.69/RT + 1.129 \times 10^{-2} \ln t \qquad /9/$$

The equation for the intersection point limiting the operating ranges for the equations is

$$0 = 1.2792 - 1002.37/RT + 1.129 \times 10^{-2} \ln t \qquad /10/$$

The factor in the activation energy term is R, cal/degree x mole.

The differential changes of the degree of crystallinity as a function of temperature and time are correspondingly

$$df_c/dT = E/RT^2 \text{ and } df_c/dt = b/t \qquad /11/$$

wherein the constant factors E and b correspond to the values of the equations (Table 2).

Based on the equations corresponding to the measured values it is observed that for unit time (t = 1 min) the difference between the crystallinity fractions corresponding to the temperatures 70°C and 110°C is $\Delta f_c = 0.3588$ (0.4093-0.0505), *i.e.* 35.88 p-%. The increase in the degree of crystallinity of the polymer as compared to the initial value, is thus 710%, *i.e.* quite high.

According to the equations, the increase in degree of crystallinity as a function of time is independent of the temperature. At time values below the intersection point of the crystallinity equations, for each isotherm, the increase in the crystallinity fraction corresponding to a time decade ($\Delta t$, min) is $\Delta f_c = 0.052$ *i.e.* 5.2 % (for example isotherm 110°C: the time interval 0.1 - 1.0 min, $\Delta f_c = 0.4093 - 0.3573$).

The increase in crystallinity as a function of time is thus fairly small, the momentary growth being still rapidly decreasing as a function of time.

In this context it is especially to be noted that the growth in the degree of crystallinity is, in addition to the crystallization rate, limited also by the heat transfer rate (that is the dimensions of the fibre or film, the technical heat transfer apparatus, *etc.*) at the crystallization temperature range or when aiming for an isotherm.

Subexample 1.4

In this subexample the value for the long identity period for polypropylene and its changes as a function of time and temperature are studied. The value for the statistical amorphous layer thickness of the polymer, as a function of time and temperature, is calculated from the statistical value of the long period by means of the value of the degree of crystallinity.

For all the tested polymers, similar values for the long period as a function of temperature and time were obtained within the limits of accuracy of measurement, which for its own part proves the independency of the period value of the degree of crystallinity.

In the structural system of the propylene polymer being studied, the value of the Lorenz-corrected long period (L(Z), Å) as a function of temperature (T, K) and time (t, min), is of the form

$$L(Z) = 92.64 + 1864.4/(435.44 - T) +$$

$$[(465.0/(444.01 - T)) - 3.7326] \ln t \qquad /12/$$

For the differential changes of the period as a function of temperature and time, the following equations are obtained

$$dL(Z)/dT = 1864.4/(435.44-T)^2 + [465.0/444.01-T)2] \ln t \qquad /13/$$

$$dL(Z)/dt = [(465.0/(444.01-T)) - 3.7326]/t \qquad \text{/14/}$$

It can be observed from the equations that the time dependency of the long period is also a function of the temperature. The value for the long period grows rapidly as a function of temperature, especially when approaching the melting range of the polymer. The increase of the value L(Z) during unit time in the temperature range 70-150°C is (LZ):112.9 - 244.4 Å, at value intervals of 20°C corresponding to: 4.9-8.4-17.2-62.5 %. The increase of the value L(Z) during unit time as a function of time in the said temperature and value intervals is correspondingly 129.9-93.7-95.7-142.7 %. Isothermally, the growth rate of the long period L(Z) is correspondingly constant during a decade time interval, but rapidly decreasing with respect to time.

The long period being the sum of the amorphous and crystalline lamellar thickness (statistical), the amorphous lamellar thickness (L(Z), Å) is obtained from the product $(1-f_c)L*$, the Lorenz-corrected measurement value for the period being used in this study. It can be mentioned that a linear relationship prevails between the period values within the limits of accuracy of measurement, which in the test series A-2 is of the form

$$L* = 1.064 \, L(Z) + 30.59 \qquad \text{/15/}$$

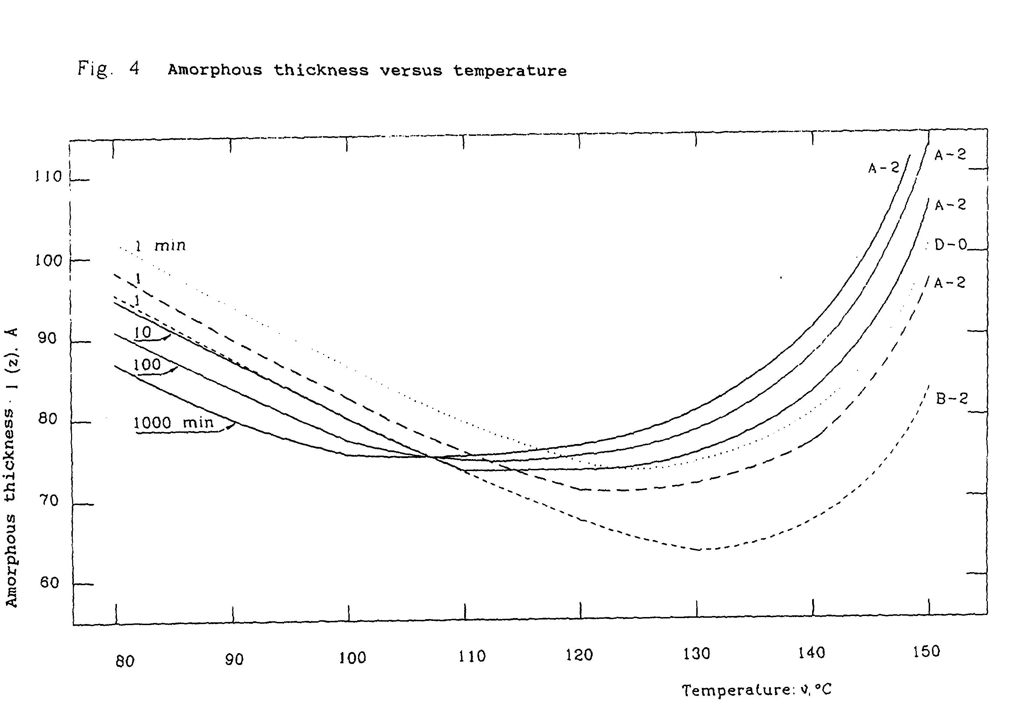

The values for the product $(1-f_c)L(Z)$ corresponding to the measurement values for the degree of crystallinity for the test series A-2 of the subexample 1.3, as a function of temperature, for a number of time decades are given in the Figure 4. For comparison, in the Figure 4, also the values for the amorphous lamellar thickness corresponding to the crystallinity values for the test series B-2 and D-0 are indicated as a function of temperature during unit time. From the equations it can be established that the increase of the crystalline lamellar thickness is a monotone function of temperature. From the equations and the Figure it can observed in addition that in the temperature range under examination, the amorphous lamellar thickness is characterized by a deep minimum. Consequently, the amorphous lamellar thickness first decreases with an increase in temperature and degree of crystallinity (*i.e.* a decrease of the amorphous fraction), but starts then to rapidly grow after the minimum range located in the temperature range of 100-130°C. In practice, the crystalline lamella thus increases in length and becomes narrower, whereby the amorphous lamella can increase in thickness, even though the amorphous fraction decreases.

The position of the minimum area of the amorphous lamellar thickness of the polymer matrix as a function of temperature is a function of the initial structure of the sample, the heat treatment time and the changes in the degree of crystallinity. The position of the area is especially affected by the time and temperature limits for the operability ranges for the crystallinity degree functions (there is a minimum area also when the crystalline growth is monotonous in the area). In order to determine the amorphous lamellar thickness of the test samples, the sample specific crystallinity function has to be determined always.

Based on the observations, the amorphous lamellar thickness of the polymer and the changes thereof can be fairly accurately regulated by regulating the crystallinity degree and the long identity period of the polymer matrix. The regulations partly overlap. The regulation of the crystallinity degree takes place especially by regulating the temperature of the polymer matrix, the regulation of the treatment time being marginal. The regulation of the long period takes place by regulating both treatment temperature and time.

In the present new regulation method, the position and transport of the polymer additives in the internal and surface areas of the matrix are regulated by means of the structural changes in the amorphous part of the polymer.

Subexample 1.5

In this subexample, the internal finishing additives for polypropylene used in the Example 1, their solubility and their diffusional movement in the polypropylene, are studied.

In the Example, two different types of hydrophilizing additives are used for the internal finishing, one of which is a fluorine chemical (FC) and the other a polysiloxane chemical (SwC). The structural formulas, the molecular weights, the F- and Si-contents are given in the Table 3. The fluorine chemical is comprised of a saturated, monovalent fluoroaliphatic group, the alkyl group of which contains eight fully fluorinated carbon atoms and of a long-chained, non-ionic, water soluble, primarily ethylene oxide containing group, and of a $SO_2N-C_2H_5$-linking group, connecting said groups. The polysiloxane chemical contains a dimethyl polysiloxane chain, in which part of the siloxane molecules are substituted, in place of a methyl group, by a monovalent, ethylene and propylene oxides containing oxyalkylene group.

In order to measure the diffusion rate, an additive containing film providing a concentration source, was placed into contact with a film surface formed by thin polypropylene films, using contact compression between metal bars. The diffusion cell was subjected to prolonged heating, isolated and isothermally in a thermostat, as a function of time and temperature. The quantity of additive which had transferred through the diffusion contact border layer into the stack of films after heating was analyzed as a function of distance. In the method of analysis, the polymer matrix was dissolved (toluene) and the polymer was re-precipitated (chloroform) from the solution. The additive remaining in the solution phase was measured in hydrogen sulphide using IR-analysis and a liquid cuvette. The saturation solubility and diffusion rate constant for the additive was determined utilizing Fick's law on the basis of the distance analysis and the total amount of additive transferred from the film surface.

For the saturation solubility and the diffusion rate (S, % by weight and D, $cm^2$/s) for the FC- and SwC-chemicals the values indicated by the following equations apply:

FC:

$$S = 5.025 \times 10^5 \exp(-10749/RT)$$

$$D = 8.760 \times 10^{-1} \exp(-12098/RT) \qquad /16/$$

SwC:

$$S = 3.853 \times 10^{-1} \exp(-486/RT)$$

$$D = 1.568 \times 10^3 \exp(-18282/RT) \qquad /17/$$

In the equations: Temperature: T, K and the general gas constant: R, cal/degree . mole.

Subexample 1.6

This subexample examines the transport in a spinning fibre of FC- and SwC- chemicals blended in the polymer for surface modification, by means of a simplified diffusion-surface-adsorption-process. The FC-chemical belongs to groups of saturated fluoro-chemicals according to the patent application CA 2.066.012, which produce a so called permanently hydrophilic surface in the polymer. There is always a sufficient quantity of chemical on the polymer surface and the polymer matrix contains a sufficient reservoir in order to produce and maintain a permanent surface concentration. The chemical SwC belongs to the group of multifunctional substituted organopolysiloxanes according to the patents USP 4.857.251 and USP 4.920.168, which have a hydrophilizing effect on the polymer surface. These chemicals segregate to the new surface formed during the polymer melt processing, and after processing, they have a differential increasing concentration from the center of the fibre or film matrix to the surface. If necessary, this segregation process is facilitated by heating the fibre product in the temperature range of 27-95 °C.

It can be assumed that both exemplified chemicals to be enriched in the surface area of the polymer are at some processing stage controlled by diffusion.

The early stages of the surface adsorption process, where the surface is occupied by only a few adsorbed molecules, can be illustrated by the Langmuir-Schaefer-diffusion equation /24/

$$M = 2Co\,(Dt/\pi)^{\frac{1}{2}}, \text{ where the parameters are:} \qquad /19/$$

M (mol/$cm^2$) is the surface concentration
Co (mol/$cm^3$) is the constant matrix concentration
D ($cm^2$/s) is the diffusion constant
t (s) is time.

It is assumed that

- a local equilibirum is immediately formed on the surface
- the surface concentration (M) is equal to the sur-face surplus ($\Gamma$)
- the surface concentration (M) is much higher than the matrix concentration (Co)

By introducing into the equation /19/ Gibbs adsorption equation /20/, the surface pressure equation /21/ is obtained

$$\Gamma = -(RT)^{-1}(\delta\gamma/\delta\ln c)\,\pi \qquad /20/$$

$$= 2RT\, Co\, (Dt/\pi)^{1/2}, \text{ where the parameters are} \qquad /21/$$

$\pi$ (dyne/cm) is the surface pressure
$R = 8{,}3156 \times 10^7$ (erg/degree · mole) is the general gas constant
$\gamma$ (dyne/cm) is the surface tension.

For the determination of the surface pressure values for the exemplatory chemicals, the following values have been used in the calculation:

-  from the equations presented in the subexample 1.5 obtained from the diffusion measurements for the chemicals FC and SwC, the values for the diffusion constants corresponding to the temperatures 200°, 120°, 100° and 80°C have been calculated. The value for the diffusion constant corresponding for the molten state of the polymer has been estimated to be three times compared to the values lues of the solid phase at the same temperature.
-  the value Co = 0.23 % by weight has been taken for the additive concentration of the polypropylene matrix, wherefrom the values Co (mol/cm$^3$) = 2.21 x 10$^{-6}$ and 6.81 x 10$^{-6}$ are obtained for the chemicals FC and SwC, respectively.
-  the height of the cooling zone of the spinning apparatus employed was 0.05 m and the average speed of the fibre cable in the path was 80 m/min, wherefore the residence time of the polymer in the molten area was t = 3.75 x 10$^{-2}$s. In the calculation results, the result corresponding to the unit time, that is $\pi/t^{1/2}$, has been given, it thus being easy to introduce other time values for evaluation.

The calculation values for the surface pressure ($\pi$) corresponding to the polymer melt-solid-interval and the solid state, are presented in the following Table 4.

Table 4.

| Temperature °C | Polymer state | $\pi$, dyne/cm | | | |
|---|---|---|---|---|---|
| | | FC | | SwC | |
| | | $t_1$ | $t_2$ | $t_1$ | $t_2$ |
| 200 | l | 254.7 | 49.3 | 125.7 | 24.3 |
| 120 | l | 57.1 | 11.1 | 14.4 | 2.8 |
| 120 | s | 33.0 | | 8.3 | |
| 100 | s | 21.8 | | 4.2 | |
| 80 | s | 12.3 | | 2.0 | |
| $t_1 = 1\ s = \pi/t^{1/2}$, $t_2 = 3.75 \times 10^{-2}s$ | | | | | |

According to measurements, the surface tension values for the chemicals FC and SwC are essentially the same at room temperature. At high temperatures the temperature dependency of the surface tension (-d$\gamma$/dT = 0.048) of the chemical SwC was used in the calculations. From the surface energy values of polypropylene and the chemicals /25-26/, the expected surface pressure values are obtained as the equation

$$\Delta\gamma(dyne/cm) = 11.89 - 0.008T \qquad /22/$$

For the temperature values of the Table 4, the following values are obtained from the equation: $\pi$ (dyne/cm) /$\vartheta$, °C 8.10/200°, 8.74/120°, 8.90/100° and 9.06/80°.

By comparing the surface pressures obtained, it can be established that, when using the chemical FC, a monomolecular FC-layer is formed in the fibre surface, in addition to the melt range temperatures, also at the temperatures corresponding to the solid (iPP) range. When using the chemical SwC, only very high melt range temperatures are sufficient for layer formation. The calculations show that, especially when the polymer melt spinning takes place at high temperatures ($\vartheta \geq 200$°C), a monomolecular additive layer can be formed in the fibre and film surface through a diffusion-adsorption-mechanism. However, a number of presumptions and approximations have been made in the calculations, wherefor the said comparison result is only guiding and usable for comparing different surface chemicals to each other.

When studying FC-chemical containing (> 1 % FC) quenched thin films with an electron microscope (Cambridge: 3500-20000x) and SEM/EDS-analysis, it could be observed that the chemical was very unevenly distributed, and that a part thereof was present in the form of globular segregations with a much higher fluorine content than the matrix. No effective FC-layer could be detected on the polymer surface; also the dynamic contact angle measurements (Cahn) indicated the presence of a hydrophobic PP-surface. At low FC-chemical contents, (FC appr. 0.5 % by weight), the F-distribution was more even than in the former case and no matrix segregations could be observed; the film surface, however, corresponded to its characteristics to a pure PP-surface. Surface examination of thin films containing the SwC-chemical (4.1 % by weigth SwC) using an AFM-apparatus (Atomic Force Microscopy: Nanoskop Digital Instrument) indicated that the chemical segregated as conglomerates especially at the spherulite borders, whereas the other film surface parts were quite SwC-poor. Contact angle measurements of the same samples indicated a hydrophobicity almost equivalent to that of the starting polymer.

Subexample 1.7

Subexample 1.7 examines the behaviour of the surface active fluorine and polysiloxane chemicals (FC and SwC) when changing the super- and substructures of the polymer matrix in accordance with the claimed regulation method.

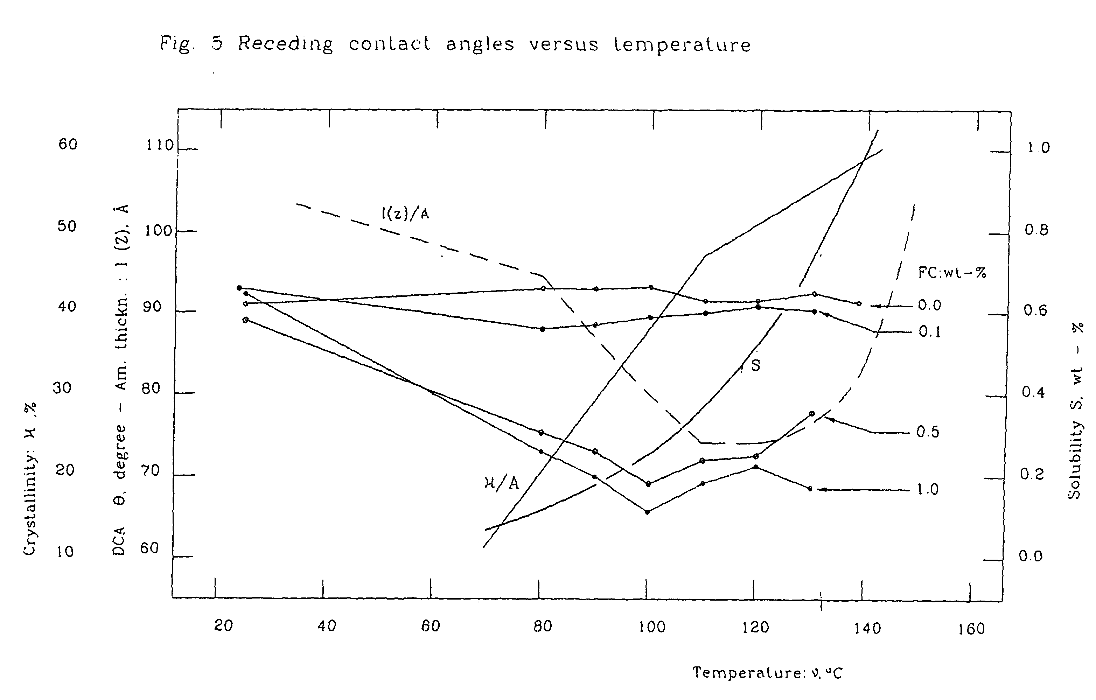

Surface chemicals containing film and fibre samples were prepared from polypropylene for the study. The samples were quenched by using different cooling rates in order to obtain the desired super- and substructures in the initial matrix. In order to further develop the initial structures of the propylene matrix to have the desired degrees of crystallinity and lamellar thicknesses, the samples were heat treated in conditions of varying temperature and heating times. The conditions used in the preparation of the samples and the structural functions of the sample matrices are described in the subexamples 1.1 to 1.4. Of the crystallinity functions disclosed in the Table 2, those corresponding to the samples A-1, -2 and -3 are fluoro-chemical containing, and those corresponding to the samples B-2, C-2 and D are polysiloxane containing. The spinning and draw fibre samples correspond structurally to the test series 82B of the subexample 1.2. The values for the long identity period of the samples correspond, within the limits of accuracy of measurement, to the function given in the subexample 1.4. The water wettability contact angle for the samples of the test series were measured with a Cahn DCA-322-analyzer (Dynamic Contact Angle Analysator). The contact angles as a function of treatment temperature (time 15 min) of samples corresponding to fluoro-chemical FC-concentrations of 0.0, 0.1, 0.5 and 1.0 % by weight are indicated in the Figure 5. The same Figure also includes the values for the degree of crystallinity, amorphous lamellar thickness and the equilibrium solubility of the FC-chemical corresponding to the subexamples 1.3 - 1.5.

The starting structure of the samples of Figure 5 was smectic. In the spinning samples of the Figure, this structure disappears over a sm -> $\alpha$-transition at a temperature range of appr. 70-130°C, whereby quite substantial states of disorders, greater than those of the isothermal saturation state, appear in the matrix during the short periods of processing and especially at low transition temperatures. In this transitional temperature range, also the (statistical) minimum of the amorphous lamellar thickness of the polymer matrix is formed, as well as a substantial increase in the degree of crystallinity. In the processing conditions used for the samples according to the Figure, the surface chemical (FC) did not rise to the sample surface, but the wetting angles of the samples corresponded to the hydrophobicity of a pure polypropylene surface (sample: 0.0 % by weight FC), $\theta > 90°$. The $\theta$-values as a function of temperature for the samples corresponding to the concentrations 0.05 and 0.10 % by weight FC still corresponded to the values for the unblended sample ($\theta \sim 92°$). For the samples corresponding to 0.5 and 1.0 % by weight FC, there was a substantial decrease of the wetting angle so that the $\theta$-value (60-65°) corresponding to the minimum contact angle temperature range of appr. 100-110°C represented a wetting angle of a substantially monomolecular fluoro-chemical surface (surface energy: $\gamma$, erg cm$^{-2}$:

$\gamma(25°C)/\gamma(110°C)$: iPP: 29.8/24.8 and FC: 22.6/17.6.

From the solubility curve of the fluoro-chemical presented in the Figure 5 it can be deducted that at the temperatures 80, 100, 110 and 120°C, the saturation solubilities are 0.11, 0.25, 0.37 and 0.53 % by weight, respectively. Consequently the samples blended to a concentration of 0.5 and 1.0 % by weight are at the temperature range $\gamma < 100-110°C$ supersaturated with respect to the fluoro-chemical. This state of supersaturation increases vigorously at the temperature range of $\gamma = 80-100°C$ when the degree of crystallinity increases and the proportion of the smectic and/or amorphous phase decreases. At the same time the lamellar thickness of the amorphous phase decreases substantially, and this, together with the increase of the degree of crystallinity, causes the chemical to segregate and to be extruded or pushed to the polymer surface along the spherulite and lamellar borders. In addition to extrusion, the movement of the fluoro-chemical is affected (slowly) by the increased diffusion rate due to the decrease in the thermal activation energy of diffusion caused by the internal pressure of the system. The movement of the chemical to the surface causes an increase in the FC-molecule population as a function of temperature at the said temperature range, and a corresponding decrease of the contact angle at wetting. When the temperature increases above the range corresponding to the contact angle minimum, operating below the saturation solubility limit, the slowing down of the increase in the degree of crystallinity and especially the substantial increase in the amorphous lamellar thickness, cause the segregated chemical to redissolve into the matrix and a decrease in the internal pressure of the polymer matrix necessary for the internal extrusion or effective diffusion. The samples under study had a temperature corresponding to the maximum value of the dynamic loss module of the polymer matrix, $T_{\alpha c}$, of appr. 120°C, wherefor in the temperature range of the said contact angle minimum, also the crystal mobilization temperature limit is exceeded, whereby the internal pressure of the matrix decreases or disappears completely as a result of the rapid stress relaxation (the measurement of the complex module took place with the apparatus system: Seiko 5600: Dynamic Mechanical Spectrometer). When measuring the wetting angle in a sample series containing 0.5 % by weight of FC from samples, which had been heat treated at a temperature of $\vartheta = 110°$ as a function of time, the following equation based on the measuring values (which per se does not have any natural scientific importance) for the decrease in wetting angle as a function of time (in the time interval $t \leq 60^{min}$) was obtained

$$\theta = 88.8\ t^{-0.080} \hspace{4cm} /23/$$

The times needed to warm the samples have not been deducted from the measuring times of the equation. The change in contact angle corresponding to the change in concentration thus does not satisfy Fick's law.

In the case corresponding to an additive concentration of 0.1 % by weight FC, the saturation concentration of the fluoro-chemical is not exceeded in the whole operational range ($\vartheta$: 80°-150°C), and thus the wetting angle can decrease only to a small extent due to diffusional (slow) material transport. A momentary supersaturation is, however, possible also with small additive concentrations, as the redistribution of the additive upon cooling increases the peripheral concentration of the spherulite to appr. 3-4-fold as compared to the internal values. In such a case, the regulation method according to the invention can operate strictly locally prior to the diffusional evening of the concentration.

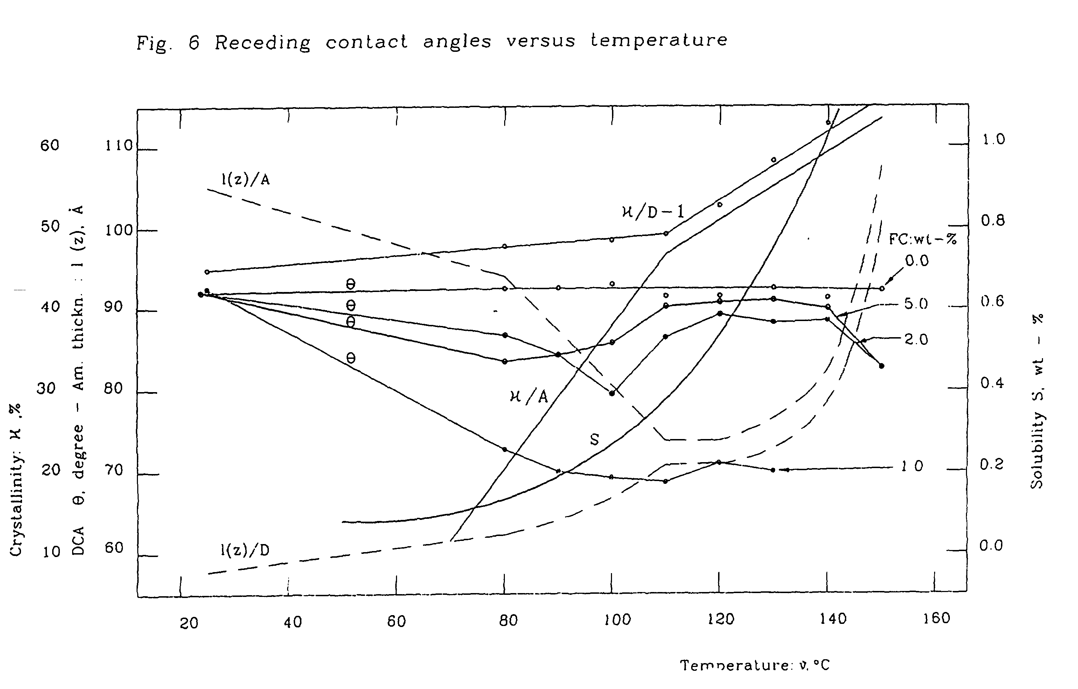

The Figure 6 shows the values for the contact angles, the degree of crystallinity and the amorphous lamellar thickness as a function of temperature for the test series D-1 and D-2 containing fluoro-chemical at a concentration of 2.0 and 5.0 % by weight. The samples of the D-series had been quenched at a lower rate than the samples of the series A, wherefor the degree of crystallinity for the starting matrices were correspondingly higher (x = 44.6 %). The values for the amorphous lamellar thickness of the series differ from each other especially at temperatures below the $T_{\alpha c}$-transition point, due to the said differences in the degree of crystallinity. According to the Figure, the minimum values for the contact angles coincide in the same temperature range, but the contact values for the series D are very low compared to those for the series A. The change in the degree of crystallinity for the sample series D before the crystal mobilization temperature limit is very low and the amorphous lamellar thickness is slightly increasing, wherefor the conditions for internal extrusion and forced diffusional material transport are lacking. It is also especially to be noted that according to the SEM/EDA analyses of the subexample 1.6, when the melt solidifies, the excess chemical exceeding the solubility limit is separated from the polymer matrix formed as a finely divided (*i.a.* a function of the shear rate) globular discharge, that is, the excess chemical becomes inert in the matrix structure, and consequently there is no advantage of a high additive concentration. It is to be noted that when the thickness of the polymer film corresponds to the conventional polypropylene fibre gauge (the diameter of a 2.2 dtex fibre is 17.6 μm) and assuming that a true surface active fluoro-chemical, corresponding to a monomolecular surface layer ($\approx$ 40 $\text{Å}^2$/FC-molecule), is evenly distributed in the film matrix at the start of the process, such a "starting concentration" thereof corresponds only to a concentration of 0.036 % by weight. Thus, said additive concentrations up to several percent (USP 4.857.251 and CA 2.066.012) are in excess by decades.

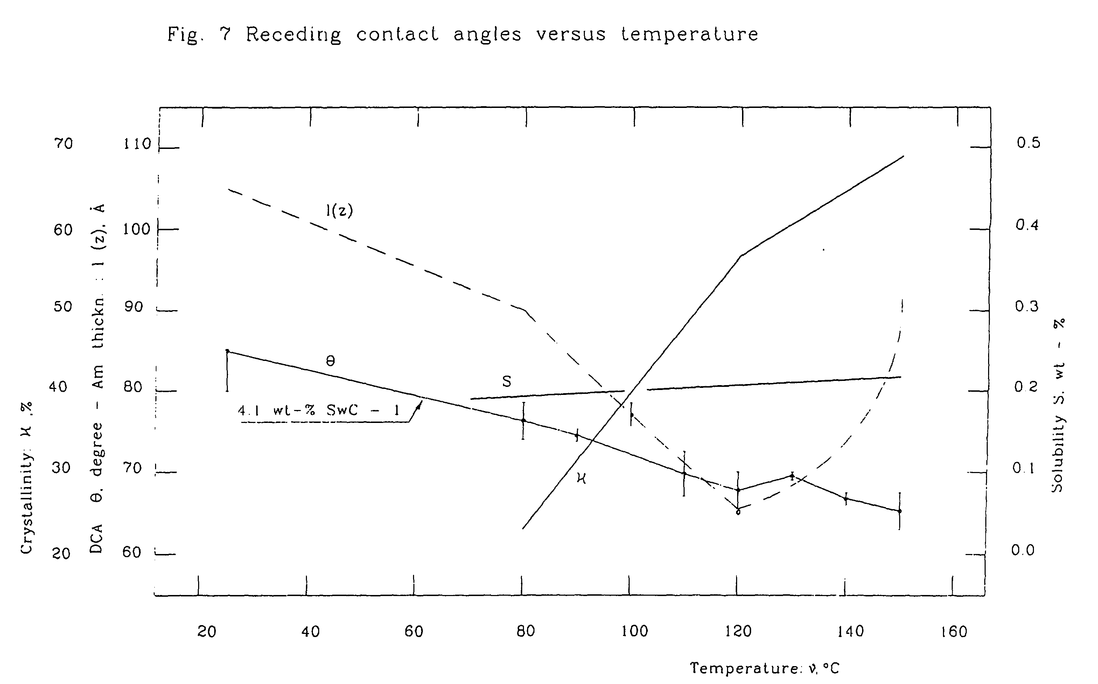

The Figure 7 shows the contact angles, degree of crystallinity, amorphous lamellar thicknesses and the chemical saturation solubilities as a function of temperature for samples of the sample series (B-2) corresponding to a polysiloxane concentration (SwC-1) of 4.1 % by weight. From the results of Figure 7 it can be deduced that, compared to the test series A, the minimum area for the contact angles has moved to an appr. 10°C higher temperature ($\chi$ - 120°C), at which temperature also the amorphous lamellar thickness, dictated partly by the degree of crystallinity, reaches its minimum value. In order to determine the isothermal time effect on the contact angles, heat treatment series were generated from the sample series B-2 at the temperatures $\vartheta = 100°$, 110°, 120° and 130°C as a function of time (3-2600 min). The contact angles of the samples of the test series followed approximately the changes in the amorphous lamellar thickness of the polymer matrix. At the temperature $\vartheta = 100°$C, the amorphous lamellar thickness decreased, as also the contact angle, as a function of time. The values corresponding to the temperatures $\vartheta = 110°$ and 120°C fell between the said border temperatures. It is especially to be noted that the "equilibrium values" of the contact angles corresponding to the different temperatures, were established immediately, just after the temperature having been established, which corresponds to a rapid and big change in the degree of crystallinity of the polymer after the temperature change and a subsequent slower 'isothermic' time change.

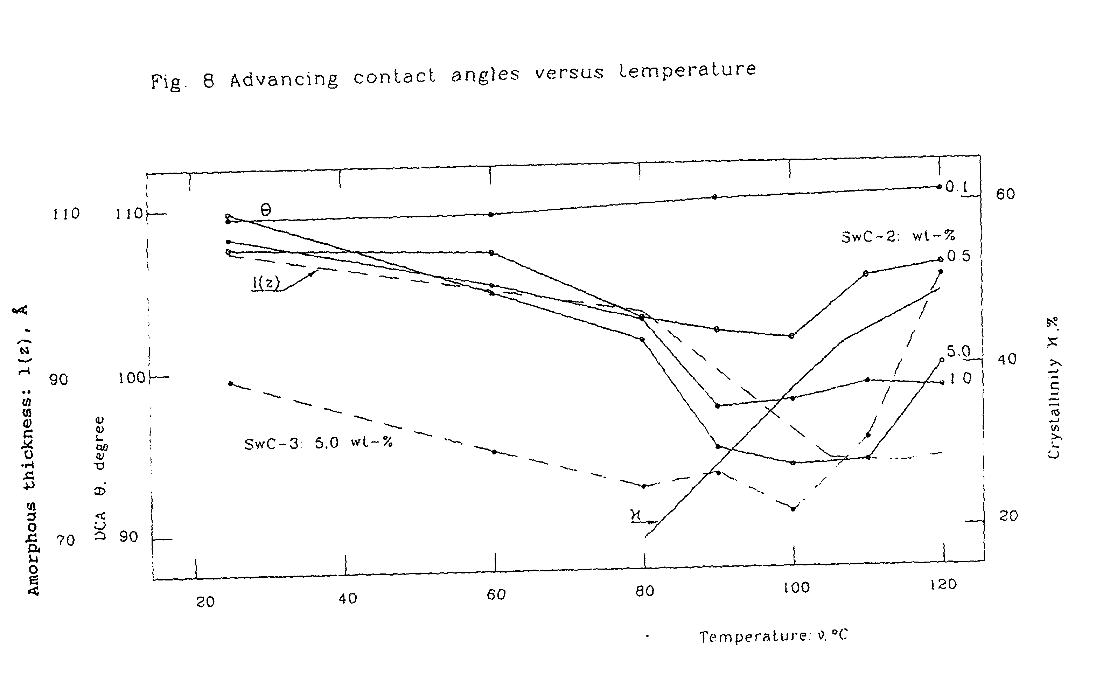

In the above mentioned test series, poorly water soluble chemicals having a long fluorine and silicon chain (MW: 940/FC and 3000/SwC-1) have been used, which are of importance especially in the preparation of fibres for water needling. Surface chemicals having a lower molecular weight than the afore mentioned and a short Si-chain are SwC-2 and SwC-3, of which the former (M ~ 1000) is completely water soluble and the latter (MW ~ 650) is partly water soluble (Table 3). The effect of these chemicals on the wetting angle of polypropylene as a function of temperature (test series E) is indicated in the Figure 8. In the wetting angle measurements of the test series, the advancing-contact angle based on immersion of the sample was used (in the others, the receding-contact angle based on emersion of the sample), in order to partly eliminate the errors due to the water solubility of the chemicals. The Figure 8 shows the degree of crystallinity (E: Table 2) and the amorphous lamellar thickness of the samples corresponding to the chemicals SwC-2 and -3. According to the results, both the minimum value for the amorphous lamellar thickness and the wetting angle minimum again fall within the same temperature range, which, however, is located below the temperature values for the series (B-2) for the chemical SwC-1. The behaviour of the low molecular polysiloxanes in the polypropylene matrix, due to the increased molecular mobility and matrix solubility, corresponds completely to the behaviour of the afore mentioned fluoro-chemical. It is, however, to be noted that the separation of the polysiloxanes as a finely divided globular discharge, differs from the corresponding discharge of the fluoro-chemical (apparently due to differences in melt shear rate) also at low solubility values (a dense population of SwC-globules open up directly to the polymer surface, and consequently also quickly quenched samples often have an already reduced wetting angle).

Based on the results of the Example 1, it can be established that the surface properties of polypropylene samples blended with surface chemicals can be regulated to a high degree by regulating the chemical concentration in the polymer matrix and its super- and substructures.

It has been shown that the structural changes in the polymer matrix are especially sensitive to the quenching conditions of the polymer melt, the spinning and drawing orientations (draw ratios) and the variations in the temperature and time values of the heat treatment. The location and mobility of the additives can be improved and regulated also under the conditions of a high quenching crystallinity degree of the polymer and up to the temperature limit of the crystal mobility of the polymer matrix and even above said limit, by utilizing the temperature and time functions of the long identity period of the matrix. When manufacturing fabrics using the water needling technique according to the subexample 1.1, the fibres are subjected to the impact of high energy water jets (pressure wash), whereby all additives are released from the polymer surface (especially from the non-polar sur-face of polypropylene). In this case the regulation method according to the invention is especially advantageous, as the fabrics can be provided with the desired surface characteristics in the processing stages following needling and using acceptable short delay times. In fibre manufacture, it is possible to subject the fibres to an exterior finishing treatment using conventional techniques without initiating the internal finishing, whereby it is possible, in the carding and the initial stages of water needling, to use finishing additives suitable for these processes, which are released by the needling jets prior to the final 'internal' finishing of the fabric.

Example 2

The Example 2 shows the behaviour of a finely divided dye when altering the super- and substructures of a polymer matrix in accordance with the new regulation method.

The test series for the dye studies (B-236) were made in a pilot apparatus of production scale, and the test runs were substantially analogous to the test series of subexample 1.2 (82A, B). The test run conditions were the following:

- $n_r$ = 15.15
- cooling air (spinning): 850 $Nm^3$, 20°C
- cable tension: $\rho_K$, kg/$\lambda_K$: 5.93/189 - 4.36/81
- polymer: MFR/25, $M_w$/$M_N$/R = 202700/40790/4.97
- draw ratio: $\lambda$: 1.25-1.50-2.00-2.50-3.00, final gauge 2,2 dtex
- draw temperature, $\vartheta$ = 65°C.

The standard dye blended (0.5 % by weight) into the polymer melt (260°C) was Permanent Red-E3B, median size 210 nm.

The degree of crystallinity of the fibre samples as a function of temperature, time and draw ratio follows the simulating equations:

- spinning (1-godet): $\lambda_K$ = 79-189

$$\chi = 6.687 \ln\lambda_K - 20461/T + 69.761 + 2.60 \log t \qquad /24/$$

- drawing (2-godet): $\lambda = 1.25 - 2.00$

$$\chi = 53.819\lambda + [10492.7-22450\lambda]/T + 28.307 + 2.6\log t \qquad /25/$$

- drawing (2-godet): $\lambda = 2.00 - 3.00$

$$\chi = 35.663 \lambda + [-732-16838\lambda]/T + 64.618 + 2.6\log t \qquad /26/$$

The values of the Lorenz-corrected long period, L(Z), for the test fibres follow the equation 12 of subexample 1.4.

For measuring the colours of the test fibres, CIELAB-units and corresponding coordinate systems /27/ were used. The colour measurements were carried out with a Minolta CM-1000-spectrophotometer.

The coordinates for the PR-E3B dye (cover: 28 μm polypropylene film) were a* = 56.20, b* = 18.02, L* = 46.08 and C* = 59.02. The hue-value of the dye was h = 17.8° (h = arctg(b*/a*)). Qualitatively speaking, the colour of the standard was 'strong red purple'.

The colours of the test samples both for spinning and draw fibres at varying draw ratios and treatment temperatures (90°-110°-130°) fell approximately in the near vicinity of the 'master'-line /27/ so that

$$a^* = 2{,}105\ b^* + 41{,}567 \qquad /27/$$

The coordinates a* and b* increase when (the spinning draw ratio decreases and the draw ratio increases) the average chain orientation (fav) increases. In a qualitative respect, the colours fall in the area 'strong red bright'. The colour changes are much bigger for spinning fibres than for draw fibres. The changes in the fibre chain orientation also affect the colour changes considerably stronger than do the temperature values.

The effect of the heat treatment on the colour changes in the samples become well evident in the Chroma/ Value (*i.e.* C*/L*)-coordinate system. Generally speaking, the colour of the test samples darkens and strengthens (the 'Value' value decreases and the 'Chroma'-value increases) when the chain orientation of the polymer matrix increases. The following function is obtained isothermally for the spinnig fibre samples of the test series

$$L^* = -(2/3)\ C^* + C \qquad /28/$$

wherein the constant C depends on the temperature *i.a.* C/ϑ,°C: 92,37/90, 91,80/110 and 92,65/130°C. The effect of the heat treatment on the colours of the draw fibre is less than on the colours of the spinning fibre. The function obatined for the draw fibre is of the form

$$L^* = -(1/2)\ C^* + 86.00 \qquad /29/$$

The heat treatment temperature for the spinning fibre, $\vartheta = 110°C$, produces lightness/saturation-values for the colour which are closest to the standard and so that the lowest chain orientation value is closest to the comparison colour.

When comparing the colours of the fibre samples directly with the colour standard, PR-E3B, in the coordinate system $\Delta L^*/\Delta C^*$, it can be seen that the Chroma-value is negative over the whole area, and the test series is thus completely in the Pale-sector of the colour chart. The coordinates for the spinning and draw fibres again fall approximately on the same 'master'-line ($\Delta L^* \sim 1.2\Delta C^*$). The colour values for the samples No. 10 ($\lambda_K = 79$, $\lambda = 3.0$) appear with a slightly higher angular coefficient than the former.

The colours of the fibre samples are compared also to the standard colour, the colour difference is calculated, $\Delta E$ (the square root from the sum of the L*-, a*-, b*-difference squares) and the differences obtained are plotted as a function of the average chain orientation of the polymer matrix. The curve thus obtained gives the colour change in the whole matrix deformation field. The colour difference of the spinning fibre increases rapidly as a function of orientation and continues in the orientation area of the draw fibre to slowly increase to a maximum, which at different isotherms are located in the orientation range fav ~ 0.7 - 0.75. When the orientation increases to correspond to a microfibrillar structure, the colour difference decreases and approaches the corresponding values of low orientation spinning fibres.

It can be mentioned that the behaviour of the hue-difference values (Δh) as a function of orientation correspond to the colour difference values.

When comparing the change in the values for the degree of crystallinity obtained from the formulae /24/ - /26/ and the change in values for the amorphous lamellar thickness obtained therefrom and from the equation /12/ as a function of the matrix chain orientation, it can be noted that

- in the orientation area of the spinning fibres, the crystallinity values increase and the values for the lamellar thickness decrease when orientation increases
- in the orientation area of the draw fibres, the crystallinity values decrease and the values for the lamellar thickness increase as a function of orientation
- in both areas the changes are small and especially the effect of the heat treatment temperature on them is low.

As the concentration of the dye in the fibre samples is very small and in solid form during the process and as the changes in the values of the crystallinity degree and the lamellar thickness of the polymer matrix are small, the diffusional movement of the dye in the solid polymer is quite insignificant over short delay times. For the samples being studied, the strongest colour regulation in accordance with the claimed method is obtainable through structural changes in the polymer matrix with respect to the location and path of movement of the dye. In the fibre spinning stage, the number of c-oriented crystal lamellas in the fibrils is quite low, the radial orientation with its long diffusion distances dominating. When the chain orientation increases, the polar orientation of the lamellae of the deformed spherulites is further strengthened. Under these conditions, the dye cannot move along favourable paths of movement, but remains in the interior parts of the matrix, the colour saturation simultaneously weakening. At high average chain orientation values, in the microfibrillar area of the draw fibre matrix, the colour saturation increases both with regard to low draw temperature fibres and heat treated fibres, following a change in direction of the matrix lamellar borders to be perpendicular to the polymer surface.

In accordance with the obtained measuring results, fibre colour coordinates closest to the standard colour are obtainable by using low chain orientation and accompanying low draw orientation, whereby the density of the lamellae parallel to the normal of the polymer matrix surface is great. A corresponding result is obtainable in the highly chain-oriented microfibrillar area of the polymer matrix. It is then also possible to regulate the amorphous lamellar thickness as a function of both time and temperature.

Based on the colour study, colour regulation is possible also in the area of lower saturation (in the example: in the sector of strong-red-bright) by means of both the average orientation and the temperature. The area of change is, however, narrow in the exemplified case.

In the samples of the example, use was made of the low colour concentration of the fibre samples in order to improve the differentation of the structural effects of the polymer in the colour measuring technique used. Increasing the colour concentration to a normal level improves the possibilities for regulation.

Example 3.

In the Example 3, some possible embodiments of the new regulation method are briefly shown in the preparation of non-woven fibre fabrics using thermobonding.

In the thermobonding of fibres using hot rolling and a pattern roll-smooth roll system, a disturbance factor is that the bonding takes place under pressure and at high speed. Hereby an intensive mechanical radical formation and subsequent oxidation takes place in the polymer matrix of the bonding area under the said conditions of high shear. Thus conditions of autogenous oxidation are formed in the bonding matrix, leading to a weakening of the bonding in *statu n.,* and subsequent storage ageing. This ageing is further advanced by the effect of light (UV) and thermal energy during storage and use.

In the production of fibres, mechanical radicals are formed in the spinning and especially in the drawing stage, both dependent on the draw temperature, but especially the draw ratio and the draw speed. When making fibres for thermobonding, normally low draw ratios are used, because the use of high draw ratios leads to an increase in the bonding temperature range and a decrease in the binding strength. The radicals formed in the fibre spinning stage are oxidized by the oxygen already originally present in the polymer melt. During the solidification and crystallization stage of the melt, these radicals and also other reactive groups move as a cloud of contaminants in front of the spherulite borders, the possibility for oxidation at the border areas thus increasing, the initiation points for the autogenous oxidation being concentrated to the grain boundary. As the stabilization agents also concentrate to the spherulite border areas, stabilization agent poor areas are formed especially in the interior parts of the spherulites. The stabilization agents are, however, often very mobile compared to the slow large-molecular alkyl radicals, wherefor the concentration gradients of the stabilization agents are partly evened out as a result of re-diffusion.

The detrimental effect of alkyl radicals and other reactive groups can be decreased *i.a.* by the following means:

- The specific border concentration for each stabilizing agent is increased appr. 2-5-fold in order to decrease the distribution effect, whereby the destruction of the vulnerable intercrystalline, load transmitting chains is prevented at least to some extent.
- The polymer matrix spherulite size is reduced, whereby the proportion of the interspherulitical amorphous fraction in the matrix increases. Thus also the mobility of the antioxidants increases in this sparse and disorganized phase.
- The degree of crystallinity of the fibre is kept low by quenching the spinning fibre at high speed and to a low temperature. Thereby the termination rate of the alkyl radicals increases (linearly as the degree of crystallinity decreases). The termination rate of the radicals can surpass the radical oxidation rate under the effect of a suitable structural or chemical mobilizing agent.
- The increase in the value for the long identity period of the fibre polymer matrix is suppressed, whereby the crystalline lamellar thickness, which in an inversely proportional manner affects the rate and temperature of the thermal consolidation stage of bonding, decreases, and is facilitated by a low degree of crystallinity.
- Oxygen is prevented from entering the melt by conducting a protective gas into the inlet end of the extruder in the spinning stage, and by keeping low the border tensions which are induced by a high crystallinity degree in the fibre production stage. An increase in the spunorientation lowers the oxygen diffusion rate and solubility, wherefor orientation by solid state drawing, which is acceptable for drawing at spinning, but forms mechanical radicals, is not favoured.

Almost all afore mentioned operations relate directly to the area of operability of the new regulation method (Examples 1-2).

When using a fully of partly smectic fibre structure in thermobonding, it is possible to direct, by means of the rapidly increasing degree of crystallinity at the bonding temperature, sufficient antioxidants to the polymer sur-face, predominantly along the spherulite borders, to protect the bonded area against oxidation. Advantage is hereby taken especially of the observation that due to the very high bonding speed (at a conventional line speed of 120 m/min the bonding line is $4 \times 10^{-4}$s), there is not enough time for stress relaxation to take effect completely. According to x-ray scattering observations, the fabric after bonding is to its fibres still partly structurally smectic apparently extending to the border parts of the point of bonding.

When the molten and solid antioxidants function as a UV screen in addition to their chemical effect, the method variations described in the Example 2 *i.a.* for colour particles is applicable as a regulation method.

When the antioxidant is of the afore mentioned polysiloxane type, one part having at least one functional group, which is an aliphatic or cycloaliphatic amino group, the regulation methods described in the subexample 1.7 apply. As the said antioxidants are strongly surface-active, the addition of a conventional hindered amine antioxidant is needed.

When studying the results of thermobonding, it is difficult to differentiate the effect of the various partial factors. In this connection, the thermal bonding strength and the antioxidant effect are studied. In the present study, the results of thermal bonding for three fibre qualities in the thermal bonding stage are shown as an increase in the longitudinal tensile strength of the fabric (width of draw sample 50 mm, weight 20 $g/m^2$, tensile strength in Newton units). The fabrics were bonded using a pattern roll-smooth roll system, the temperature difference between the rolls being 5°C. Due to the complicated nature of the thermobonding process, the presented results are only partly comparable.

The test fibre characteristics are presented in the following table.

| Fibre | $\chi$ | L(z) | D(z) | d | $\sigma$ | $\varepsilon$ |
|-------|------|------|------|------|--------|------|
|       | %    | Å    | Å    | dtex | mN/dtex | %    |
| A     | 20.2 | 114.8 | 23.3 | 2.19 | 38.5   | 131  |
| B     | 31.2 | 128.5 | 40.0 | 2.17 | 27.4   | 209  |
| C     | 44.9 | 123.3 | 55.4 | 2.21 | 16.4   | 369  |
| $\varepsilon$ = elongation | | | | | | |

The weight and number average molecular weights and distribution ratios of the fibre polymers were: A and B: 213700-37300-5.73 and C: 207700-35300-5.88. The fibres A and B were rapidly quenched and structurally smectic; the fibre C was quenched to a high temperature and structurally amorphous-monoclinic.

The equations simulating the tensile strength of the fabrics in the thermally activated area of bonding were:

A:

$$\sigma = 5.289 \times 10^{14} \times T^2 \times \exp[-35746/RT] \qquad /30/$$

B:

$$\sigma = 1.069 \times 10^{17} \times T^2 \times \exp[-40469/RT] \qquad /31/$$

C:

$$\sigma = 1.401 \times 10^{15} \times T^2 \times \exp[-37083/RT] \qquad /32/$$

The theoretical limit values for the thermal bonding and ageing areas for the fabrics were ($\sigma_{max}$, N/$\vartheta_{max}$, °C -machine temp): A: 81.5/159.0, B: 50.9/156.0 and C: 41.9/157.6.

From the results it can be seen that the structural effect on fibre bonding strength in the presence of sufficient antioxidant, is rather substantial.

Finally the isothermal incubation time of oxidation for a fibre polymer which has been base stabilized with a phosphite-phosphonite mixture, is studied at the highest temperatures of the polymer solid state, as a function of antioxidant concentration. The antioxidant was Tinuvin 770 and the mobilizing additive was Chimassorb 81 (Table 3.). The antioxidant Tinuvin 770 wets the polypropylene surface (is itself also wetted by water) and provides good bonding moisture (also with polyethylene blended fibres). The value of the diffusion constant for the antioxidant TV 770 was measured to be: D, $cm^2/s = 5.01 \times 10^7 \exp[-27327/RT]$, wherefor it is not very "mobile" despite its molten state (D = $3.19 \times 10^{-8}/120°C$). The measured incubation time as a function of TV 770 concentration (C = 0.0 - 0.5 % by weight) was of the form

$$t_{min} = 1.264 \times \exp[-1.705 \times 10^{-3}E] \times \exp[E/RT] \qquad /33/$$

where E = 5917 + C x 3665, cal/degree x mole)
Although the antioxidant is clearly surface active above its melting point, its effect in thermobonding is not very great. At the used concentration, C = 0.15 % by weight, the incubation time was appr. 25 % greater after the structural changes than is called for by the equation /33/, and it is believed that this effect is due to the antioxidant fraction which has risen along the interspherulite borders to the surface and reacted directly with the oxygen content of the gaseous phase.

It can be mentioned that a second tested hindered amine type antioxidant, Chimassorb 944, to its wetting properties is analogous to Tinuvin 770 (is not, however, wetted by water as is TV), but is not alone an advantageous antioxidant in thermobonding due to its high molecular weight and slow mobility. Both of these antioxidants can, however, well be used in thermal airbonding, where no mechanical radicals resulting from high shear work appear.

The examples given in the description of the invention provide at least a partial picture of the possibilities for regulation of the method. The explanations relating to the mechanisms applicable in the invention correspond to the present level of knowledge, wherefore one cannot support oneself solely on these, but certainly on the results obtained.

Table 1.

| Fibre test series 82A and 82B | | | | | | |
|---|---|---|---|---|---|---|
| Position | Symbol | Fibre number | | | | |
| | | 1 | 2 | 3 | 4 | 5 |
| 1-godet | | | | | | |
| A | $n_r$ | 6.30 | 7.58 | 10.10 | 12.63 | 15.15 |
| B | $n_r$ | 15.15 | 15.15 | 15.15 | 15.15 | 15.15 |
| A | $v_1$ | 30 | 30 | 30 | 30 | 30 |
| B | $v_1$ | 72 | 60 | 45 | 36 | 30 |
| A,B | $\lambda_K$ | 189 | 157 | 118 | 94 | 79 |

Table 1.   (continued)

| Fibre test series 82A and 82B | | | | | | |
|---|---|---|---|---|---|---|
| Position | Symbol | Fibre number | | | | |
| | | 1 | 2 | 3 | 4 | 5 |
| 2-godet | | | | | | |
| A | $v_2$ | 37.4 | 45.3 | 60.6 | 75.0 | 90.6 |
| B | $v_2$ | 90 | 90 | 90 | 90 | 90 |
| A,B | $\lambda$ | 1.25 | 1.50 | 2.00 | 2.50 | 3.00 |
| 1-godet | | | | | | |
| A | fav | fav = 0.1450 ln$\lambda_K$ - 0.2170 | | | | |
| A | $\sigma$ | $\sigma = 15.17 + 5.44 \times 10^{-3}\lambda_K$ | | | | |
| A | $\varepsilon$ | $\varepsilon$ = 1285.5 - 1909.4 fav | | | | |
| 2-godet | | | | | | |
| A | fav | fav = 0.1525 $\lambda$ + 0.4125 | | | | |
| A | $\sigma$ | $\sigma$ = 13.66 $\lambda$ + 2.33 | | | | |
| A | $\varepsilon$ | $\varepsilon$ = 692.5 - 737.5 fav; fav < 0,76 | | | | |
| A | | $\varepsilon$ = 394.6 - 345.5 fav; fav > 0,76 | | | | |

The pre-stabilization of the polymers for the fibre test series was done with a phosphite-phosphonite-mixture (Table 3) using the concentrations: 0.13 % by weight Irgafos 168, 0.065 % by weight Irganox 1425 and 0.045 % by weight Ca-stearate.

Table 2.

| The degree of crystallinity for the test series samples | | | |
|---|---|---|---|
| The equations for the degree of crystallinity (x, %) as a function of temperature (T, K) and time (t, min) for a sheet film for measuring the additive diffusion and solubility, in the area of low and high temperatures, as well as the border temperature equation, are the following $$T < Tr:\ \chi = 345.76 - 117949/T + 5.20 \log t$$ $$T > Tr:\ \chi = 216.84 - 67490/T + 2.60 \log t$$ $$Tr:\ O = 127.92 - 50457/T + 2.60 \log t$$ The other equations for the degree of crystallinity corresponding to the examples differ from the said equations only as to the constants (indicated a, b and c) in the following table | | | |
| Test film | Constant | | |
| | a | b | c |
| Sheet film MO | 346.46 | 219.84 | 126.62 |
| Sample A-1 | 349.26 | 220.34 | 128.92 |
| Sample A-2 | 348.76 | 219.84 | 128.92 |

Table 2.   (continued)

| The degree of crystallinity for the test series samples | | | |
|---|---|---|---|
| Test film | Constant | | |
| | a | b | c |
| Sample A-3 | 349.76 | 220.84 | 128.92 |
| Sample B-2 | 350.76 | 225.34 | 125.42 |
| Sample C-2 | 349.76 | 224.34 | 125.42 |
| Sample E | 346.76 | 216.84 | 129.92 |

The equations for the degree of crystallinity for the test series D (t = 15$^m$) were

$$T < 383: \chi = 0.050\ T + 30.04$$

$$T > 383: \chi = 0.416\ T - 110.20$$

Table 3.   Structural formulas for the additives for the
test series samples

MP: molecular weight                SA:melt area

**Surface chemicals**

<u>CF</u>:   MP 937.7    SA < 25°C    F~34.4% by w.

<u>SwC-1</u>: MP 2996.5    SA < 25°C    Si ~ 9.4 % by w.

B (CH₂)₃ - O - (C₃H₆O)₁₃(- C₃H₆O)₂ - CH₃

<u>SwC-3</u>:  MP 647.1    SA < 25°C     Si ~ 13.0 %  by w.

B C₃H₆O - (C₂H₄O)₈ - CH₃

<u>Dye</u>   PR - E3B

Table 3

Antioxidants

Tinuvin-770: MP 481  SA 81-85$^\circ$C

Chimassorb-944: MP 3000  SA 100-135$^\circ$C

Chimassorb-81: MP 326.4  SA 48$^\circ$C

Irganox 1425:  MP  SA > 260$^\circ$C

Irgafos 168:  MP ~ 647  SA 180-186$^\circ$C

1. N.L. Jarvis, R.B. Fox, W.A. Zisman: Advances in Chemistry Series, 43, 1964, 317-331
2. R.C. Bowers, N.L. Jarvis, W.A. Zisman: I & EC Product Research and Development, 4, 1965, 86-92
3. D.K. Owens: J. Appl. Polym. Sci., 8, 1964, 1465-1475; 14, 1970, 185-192

**EP 0 753 606 B1**

4. N.I. Palmer, N. Sugarman: USP 3.870.567/1975

5. B.C. Oxenrider, C. Woolf: USP 3.899.563/1975

6. M. Sugimoto, Y. Matsumoto, N. Ikoya, K. Hasegawa: USP 4.189.420/1980

7. G.H. Meitner: USP 4.307.143: Re 31885/1985

8. D. Duchesne, B.V. Johnson: USP 4.855.360/198

9. L.H. Sawyer, G.W. Knight: FI 81371/1990

10. G.A. Gardiner: CA 2.066.012/Appl. 1992

11. R.S. Nohr, J.G. MacDonald: USP 4.857.251/1989, USP 4.920.168/1990

12. F.J. Evans: USP 3.485.706/1969, USP 3.508.308/1970, USP 3.494.821/1970; J.W. Ballow, M.R. Levy: USP 3.485.708/1969

13. B.V. Falkai: Syntesefasern, Verlag Chemie 1981

14. M. Ahmed: Polypropylene Fibers, Elsevier 1982

15. F.D. Candia, G. Romano, R. Russo, V. Vittoria: Colloid & Polymer Sci., 265, 1987, 693-703

16. V. Vittoria: J. Polym. Sci., Polymer Phys. Ed., 24, 1986, 451-455,

17. V. Vittoria, A. Perullo: J. Macromol.Sci. - Phys., B25, 1986, 267-281

18. V.I. Poddubny, V.K. Lavrentyev, A.V. Sidorovich, N.V. Mikhailova, V.G. Baranov: Acta Polymerica, 36, 1985, 301-305

19. S. Piccarolo: J. Macromol. Sci. - Phys., B31, 1992, 501-511

20. S. Piccarolo, M. Sain, V. Brucato, G. Titomantio: J. Appl. Polym Sci., 46, 1992, 625-634

21. T.G. Ryan, P.D. Calvert, N.C. Billingham: Stabilization and Degradation of Polymers: ACS no 169, Washington DC, 1978, 261-272

22. P.D. Calvert, T.G. Ryan: Polymer, 19, 1978, 611-616

23. B. von Falkai: Makromol. Chem., 41, 1960, 86-109

24. I. Langmuir, V.J. Schaetor: J. Am. Chem. Soc., 59, 1937, 2400-2415

25. A.F.H. Ward, L. Tordai: J. Chem. Phys., 14, 1946, 453-461

26. R-J. Roe: J. Phys. Chem., 72, 1968, 2013-2017

27. Ulmann's Encyclopedia of Industrial Chemistry VCH, 1987, vol. A 9, 97-105

## Claims

1. Method for regulating the physical and chemical properties of products made from a synthetic polymer, especially polypropylene, such as fibres, non-woven fabrics made therefrom, films and moulded bodies, by regulating the polymer matrix structure, and the matrix position, rate and path of movement of additives and adjuvants blended therein, **characterized** in that

   a. the extruded or moulded polymer melt is quenched to obtain a structure where the smectic + amorphous phase system, or smectic + amorphous + monoclinic phase system is stable, the quenching taking place at a rate of $T_{90\,C} > 50$ °C/s, to a quenching temperature of $\vartheta < 50$ °C, and

   b. after quenching, the monoclinic degree of crystallinity of the polymer matrix is increased by regulating the heating time and temperature so that, after heating, the amorphous + smectic phase portion contains separated polymer-blended additive corresponding to supersaturation, the heating temperature being below the mobilisation temperature of the polymer crystalline phase, that is the temperature corresponding to the maximum value for the dynamic loss module, i.e. below $\vartheta = 150$ °C,

   the amorphous layer thickness of the quenched polymer matrix being regulated by regulating the values for the long identity period and the degree of crystallinity, by regulating the heating time and temperature within the temperature range defined by the said quenching temperature and the temperature corresponding to the minimum of the amorphous layer thickness, without exceeding the temperature at which the return diffusion of the said separated additive into the amorphous + smectic matrix phase portion starts.

2. The method according to Claim 1, **characterized** in that the temperature of the melt prior to quenching is in the temperature range 230 - 300 °C.

3. The method according to Claim 1, **characterized** in that the quenching of the polymer melt takes place to a quenching temperature of $\vartheta < 20$ °C.

4. The method according to Claim 1 for regulating the properties of a fibre and film quality type polymer, **characterized** in that, after quenching, the polymer is heated in the temperature range of $\vartheta = 80 - 150$ °C, preferably in the temperature range of $\vartheta = 80 - 110$ °C, the heating time being t < 10 min, preferably t < 1 min.

5. The method according to Claim 1 for regulating the properties of a long-chained polymer of a quality suitable for moulding, **characterized** in that, after quenching, the polymer is heated in the temperature range of $\vartheta = 80 - 150$ °C, using a heating time of t > 1 s.

6. The method according to Claim 1, **characterized** in that a fibre polymer, after quenching at spinning and drawing, is heat treated isometrically in the temperature range $\vartheta = 80-150$ °C, the residence time at heating being t < 1 min.

7. The method according to Claim 1, **characterized** in that the heat treatment for effecting the structural changes of the polymer is carried out below the temperature $\vartheta = 120 - 150$ °C corresponding to the maximum value of the dynamic loss module of the polymer.

8. The method according to the Claim 1, **characterized** in that surface active finishing agents for modifying the polymer surface properties, stabilization additives against damage caused by light, heat and high-energy radiation, inorganic and organic reinforcing agents and dyes, are used as adjuvants and additives.

9. The method according to Claim 8, **characterized** in that the finishing agents are of the type

    compounds containing a non-ionic component and a fluoro-aliphatic group;
    polysiloxanes, especially two-part polyorganooxysiloxanes, wherein one part contains at least one tetrasubstituted disiloxanyl group associated with one or more trisubstituted silyl and siloxy groups, the substituents being independently selected from monovalent alkyl, cycloalkyl, aryl and heterocyclic groups, and the other part is a long-chained, oxyalkylene-containing group;
    partly fluorinated compounds, fatty acid and fatty amide compounds having lubricating properties.

10. The method according to Claim 8, **characterized** in that the stabilization additives are of the type of hindered amine-type cyclic antioxidants, or polysiloxanes, the other part of which is a piperidyl group containing a degradation stabilizing moiety.

11. The method according to Claim 8, **characterized** in that the concentration of the additives and adjuvants is such that the solubility limit of the operational range of the regulation method is exceeded, preferably 0.01-5, most preferred 0.01-2 % by weight of the weight of the polymer.

12. The method according to Claim 1, **characterized** in that the polymers used are polyolefins and/or homopolymer mixtures and copolymers of polyolefins.

13. The method according to Claims 1-7, **characterized** in that the heat treatment for providing structural changes after the melt spinning and drawing stage, are performed on non-woven fabrics made from fibres.

14. The method according to Claim 13, **characterized** in that non-woven fabrics are made from fibres using conventional thermal bonding, spunbonding, meltblowing or water jet needling technique.

15. The method according to Claims 1-14, **characterized** in that a fibre polymer, which is oriented by melt spinning and slightly draw-oriented and contains one or more finishing agents, is heat treated as a non-woven fabric at the temperature range of $\vartheta = 80 -130$ °C, the delay time being at least one second.

16. The method according to Claim 15, **characterized** in that the fibre is finished with a conventional exterior finishing agent which is removed from the fibre surface in the carding and bonding processes.

17. The method according to Claims 1-14, **characterized** in that the heat treatment for thermobonding of a spherulitic fibre of a polymer which is stabilized against autogenous light or heat energy induced oxidation and which has been rapidly quenched at spinning to a low temperature, and which is spun-oriented, undrawn or slightly drawn and has a low degree of crystallinity and low crystal lamellar thickness, is carried out in the temperature range of $\vartheta = 80 - 150$ °C the heat treatment delay time being t = $10^{-3} - 10^{-4}$ s.

18. The method according to Claim 17, **characterized** in that a polymer which is to be thermobonded at a high bonding temperature and subjected to rapid shear is stabilized, in addition to a base stabilization, with an antioxidant of hindered amine type, using an amount which is 3-6 times that of the base stabilization, the stabilization concentration being in the range of 0.1-0.5 % by weight.

19. The method according to Claims 1-14, **characterized** in that a structurally smectic-amorphous, spun-oriented spinning fibre, which is stabilized against high energy radiation damage with per se known additives of the hindered dered amine type, is bonded and heat treated as a non-woven fabric at the temperature range of $\vartheta = 80 - 150 \,°C$ in the time range of $10^{-4}$-2 s.

20. The method according to Claims 1-14, **characterized** in that fibre polymers containing non-reactive additives functioning as coating, light screen, reinforcing agent, are rapidly quenched at spinning, spun-oriented and, if necessary, by drawing and heat treated isometrically as a fibre or as a non-woven fabric at the temperature range of 80 - 150 °C, the delay time being at least $10^{-4}$ s.

**Patentansprüche**

1. Verfahren zum Regulieren der physikalischen und chemischen Eigenschaften von Erzeugnissen aus einem synthetischen Polymer, insbesondere Polypropylen, z.B. Fasern, daraus hergestellten Vliesen, Folien und Formlingen, durch Regulieren der Polymermatrixstruktur und der Matrixposition, Geschwindigkeit und Bahn der Bewegung von Additiven und Adjuvantien, die damit vermischt sind, dadurch gekennzeichnet, daß

a) die extrudierte oder in einem Formwerkzeug geformte Polymerschmelze abgeschreckt wird, um eine Struktur zu erhalten, bei der das smektische + amorphe Phasensystem oder das smektische + amorphe + monoklinische Phasensystem stabil ist, wobei das Abschrecken mit einer Geschwindigkeit von $\dot{T}_{90C} \geq 50°C/s$ auf eine Abschrecktemperatur von $\vartheta < 50°C$ erfolgt, und

b) nach dem Abschrecken der monoklinische Kristallinitätsgrad der Polymermatrix durch Regulierung der Erwärmungszeit und Temperatur erhöht wird, so daß, nach dem Erwärmen, der amorphe + smektische Phasenanteil ein separiertes mit Polymer vermischtes Additiv, entsprechend einer Übersättigung, enthält, wobei die Erwärmungstemperatur unter der Beweglichkeitstemperatur der kristallinen Polymerphase liegt, d.h. der Temperatur, die dem Maximalwert für den dynamischen Verlustmodul entspricht, d.h. unter $\vartheta = 150°C$, wobei

die amorphe Schichtdicke der abgeschreckten Polymermatrix dadurch geregelt wird, daß die Werte für die lange Identitätsperiode und den Kristallinitätsgrad geregelt werden, und zwar durch Regulierung der Erwärmungszeit und -temperatur innerhalb des Temperaturbereichs, der durch die Abschrekkungstemperatur und die dem Minimum der amorphen Schichtdicke entsprechende Temperatur bestimmt wird, ohne die Temperatur zu überschreiten, bei der die Rückdiffusion des erwähnten separierten Additivs in den amorphen + smektischen Matrixphasenteil beginnt.

2. Verfahren nach Anspruch 1, dadurch gekennzeichnet, daß die Temperatur der Schmelze vor dem Abschrecken im Bereich von 230 bis 300°C liegt.

3. Verfahren nach Anspruch 1, dadurch gekennzeichnet, daß die Abschreckung der Polymerschmelze auf eine Abschrecktemperatur von $\vartheta < 20°C$ erfolgt.

4. Verfahren nach Anspruch 1 zum Regulieren der Eigenschaften eines Faser- und Folienqualitäts-Polymers, dadurch gekennzeichnet, daß das Polymer nach dem Abschrecken auf den Temperaturbereich von $\vartheta = 80$ bis 150°C, vorzugsweise den Temperaturbereich von $\vartheta = 80$ bis 110°C, erwärmt wird, wobei die Erwärmungszeit t < 10 min, vorzugsweise t < 1 min, beträgt.

5. Verfahren nach Anspruch 1 zum Regulieren der Eigenschaften eines langkettigen Polymers mit einer zum Formen geeigneten Qualität, dadurch gekennzeichnet, daß das Polymer nach dem Abschrecken im Temperaturbereich von $\vartheta = 80$ bis 150°C während einer Zeit von t > 1 s erwärmt wird.

6. Verfahren nach Anspruch 1, dadurch gekennzeichnet, daß ein Faserpolymer nach dem Abschrecken beim Spinnen und Ziehen im Temperaturbereich $\vartheta = 80$ bis 150°C einer isometrischen Wärmebehandlung unterzogen wird, wobei die Aufenthaltsdauer beim Erwärmen t < 1 min beträgt.

7. Verfahren nach Anspruch 1, dadurch gekennzeichnet, daß die Wärmebehandlung, um strukturelle Änderungen des Polymers zu bewirken, unterhalb der Temperatur von $\vartheta$ = 120 bis 150°C, entsprechend dem Maximalwert des dynamischen Verlustmoduls des Polymers, ausgeführt wird.

8. Verfahren nach Anspruch 1, dadurch gekennzeichnet, daß oberflächenaktive Behandlungsmittel zum Modifizieren der Eigenschaften der Polymeroberfläche, Stabilisierungsadditive gegen durch Licht, Wärme und hochenergetische Strahlung bewirkte Beschädigungen, anorganische und organische Verstärkungsmittel und Farbstoffe als Adjuvantien und Additive verwendet werden.

9. Verfahren nach Anspruch 8, dadurch gekennzeichnet, daß die Behandlungsmittel solche Verbindungen sind, die eine nichtionische Komponente und eine fluoraliphatische Gruppe enthalten;
Polysiloxane, insbesondere zweiteilige Polyorganooxysiloxane, bei denen ein Teil wenigstens eine tetrasubstituierte Disiloxanyl-Gruppe enthält, die mit einer oder mehreren trisubstituierten Silyl- und Siloxy-Gruppen assoziiert ist, wobei die Substituenten unabhängig aus monovalenten Alkyl-, Cycloalkyl-, Aryl- und heterozyklischen Gruppen ausgewählt sind, und der andere Teil eine langkettige, oxyalkylenhaltige Gruppe ist; teilweise fluorinierte Verbindungen, Fettsäure- und Fettamidverbindungen mit Schmierfähigkeit.

10. Verfahren nach Anspruch 8, dadurch gekennzeichnet, daß die Stabilisierungsadditive gehemmte zyklische Antioxidantien vom Amin-Typ oder Polysiloxane sind und ihr anderer Teil eine Piperidyl-Gruppe ist, die einen Degradationsstabilisierungsteil enthält.

11. Verfahren nach Anspruch 8, dadurch gekennzeichnet, daß die Konzentration der Additive und Adjuvantien so gewählt ist, daß die Löslichkeitsgrenze des Betriebsbereichs des Regelverfahrens überschritten wird, vorzugsweise 0,01 bis 5, noch bevorzugter 0,01 bis 2 Gewichtsprozent des Polymergewichts.

12. Verfahren nach Anspruch 1, dadurch gekennzeichnet, daß die verwendeten Polymere Polyolefine und/oder Homopolymer-Gemische und Polyolefincopolymere sind.

13. Verfahren nach den Ansprüchen 1 bis 7, dadurch gekennzeichnet, daß die Wärmebehandlung zur Erzielung struktureller Änderungen nach dem Schmelzspinnen und dem Ziehen an Faservliesen ausgeübt wird.

14. Verfahren nach Anspruch 13, dadurch gekennzeichnet, daß die Faservliese unter Anwendung des herkömmlichen Thermobonding-, Spinnbonding-, Schmelzblas- oder Wasserstrahlvernadelungsverfahren hergestellt werden.

15. Verfahren nach den Ansprüchen 1 bis 14, dadurch gekennzeichnet, daß ein Faserpolymer, das durch Schmelzspinnen und leichtes Ziehen orientiert ist und ein oder mehrere Ausrüstungsmittel enthält, als Vliesstoff in einem Temperaturbereich von $\vartheta$ = 80 bis 130°C wärmebehandelt wird, wobei die Verzögerungszeit wenigstens eine Sekunde beträgt.

16. Verfahren nach Anspruch 15, dadurch gekennzeichnet, daß die Faser mit einem herkömmlichen äußeren Ausrüstungsmittel ausgerüstet wird, die beim Kardieren und Verfestigen von der Faseroberfläche entfernt wird.

17. Verfahren nach den Ansprüchen 1 bis 14, dadurch gekennzeichnet, daß die Wärmebehandlung zur thermischen Verfestigung (Thermobonding) einer sphärulitischen Faser aus einem Polymer, die gegen autogene, durch Licht oder Wärmeenergie induzierte Oxidation stabilisiert ist und beim Spinnen rasch bis auf eine niedrige Temperatur abgeschreckt worden ist und die spinnorientiert, nicht gezogen oder leicht gezogen ist und einen niedrigen Kristallinitätsgrad und eine geringe Kristallamellendicke hat, in dem Temperaturbereich von $\vartheta$ = 80 bis 150°C durchgeführt wird, wobei die Wärmebehandlungs-Verzögerungszeit t = $10^{-3}$ bis $10^{-4}$ s beträgt.

18. Verfahren nach Anspruch 17, dadurch gekennzeichnet, daß ein Polymer, das thermisch bei einer hohen Verfestigungstemperatur verfestigt und einer raschen Scherung unterzogen werden soll, zusätzlich zu einer Grundstabilisierung mit einem Antioxidanten des gehemmten Amin-Typs mit der drei- bis sechsfachen Menge derjenigen der Grundstabilisierung stabilisiert wird, wobei die Stabilisierungskonzentration im Bereich von 0,1 bis 0,5 Gewichtsprozent liegt.

19. Verfahren nach den Ansprüchen 1 bis 14, dadurch gekennzeichnet, daß eine strukturell smektischamorphe, spinnorientierte Spinnfaser, die gegen eine Beschädigung durch eine hochenergetische Strahlung mittels an sich bekannter Additive des gehemmten Amin-Typs stabilisiert worden ist, als Faserstoff in dem Temperaturbereich von

$\vartheta = 80$ bis $150°$C in dem Zeitbereich von $10^{-4}$ bis 2 s verfestigt und wärmebehandelt wird.

20. Verfahren nach den Ansprüchen 1 bis 14, dadurch gekennzeichnet, daß Faserpolymere, die nichtreaktive Additive enthalten, die als Beschichtungs-, Lichtabschirmungs- und Verstärkungsmittel dienen, beim Spinnen rasch abgeschreckt und, wenn nötig, durch Ziehen und wärmeisometrisch als Faser oder als Vliesstoff in dem Temperaturbereich von 80 bis $150°$C behandelt werden, wobei die Verzögerungszeit wenigstens $10^{-4}$ s beträgt.


**Revendications**

1. Procédé pour réguler les propriétés physiques et chimiques de produits préparés à partir d'un polymère synthétique, en particulier de polypropylène, tels que des fibres, des étoffes non-tissées préparées à partir de celles-ci, des films et des corps moulés, par régulation de la structure de matrice polymère, et de la position de matrice, de la vitesse et du trajet de déplacement d'additifs et d'adjuvants mélangés dedans, caractérisé en ce que :

   a. la masse fondue polymère extrudée ou moulée est trempée pour donner une structure où le système de phases smectique + amorphe, ou le système de phases smectique + amorphe + monoclinique, est stable, la trempe se déroulant à une vitesse $T_{90°C} \geq 50°$C/s, jusqu'à une température de trempe $\vartheta < 50°$C, et
   b. après la trempe, le degré monoclinique de cristallinité de la matrice polymère est augmenté par régulation du temps et de la température de chauffage de façon que, après chauffage, la partie de phases amorphe + smectique contienne un additif mélangé au polymère séparé correspondant à une sursaturation, la température de chauffage étant inférieure à la température de mobilisation de la phase cristalline du polymère, à savoir à la température correspondant à la valeur maximale pour le module de perte dynamique, c'est-à-dire inférieure à $\vartheta = 150°$C,

   l'épaisseur de phase amorphe de la matrice polymère trempée étant régulée par régulation des valeurs pour la période d'identité longue et le degré de cristallinité, par régulation du temps et de la température de chauffage à l'intérieur de la plage de température définie par ladite température de trempe et la température correspondant au minimum de l'épaisseur de phase amorphe, sans dépasser la température à laquelle la diffusion en retour dudit additif séparé dans la partie de phases de matrice amorphe + smectique démarre.

2. Procédé selon la revendication 1, caractérisé en ce que la température de la masse fondue avant la trempe est située dans la plage de température allant de 230 à $300°$C.

3. Procédé selon la revendication 1, caractérisé en ce que la trempe de la masse fondue polymère est mise en oeuvre à une température de trempe $\vartheta < 20°$C.

4. Procédé selon la revendication 1 pour réguler les propriétés d'un polymère du type à qualité pour fibre et film, caractérisé en ce que, après la trempe, le polymère est chauffé à une température située dans la plage $\vartheta = 80 - 150°$C, de préférence à une température située dans la plage $\vartheta = 80 - 110°$C, le temps de chauffage étant t < 10 min, de préférence t < 1 min.

5. Procédé selon la revendication 1 pour réguler les propriétés d'un polymère à longue chaîne d'une qualité convenant au moulage, caractérisé en ce que, après la trempe, le polymère est chauffé à une température située dans la plage $\vartheta = 80 - 150°$C, avec utilisation d'un temps de chauffage t > 1 s.

6. Procédé selon la revendication 1, caractérisé en ce qu'un polymère en fibres, après trempe avec filage et étirage, est traité à la chaleur de façon isométrique à une température située dans la plage $\vartheta = 80 - 150°$C, le temps de séjour au chauffage étant t < 1 min.

7. Procédé selon la revendication 1, caractérisé en ce que le traitement thermique pour effectuer les changements structurels du polymère est mis en oeuvre à une température inférieure à $\vartheta = 120 - 150°$C, correspondant à la valeur maximale du module de perte dynamique du polymère.

8. Procédé selon la revendication 1, caractérisé en ce que des agents de finissage tensioactifs pour modifier les propriétés de surface du polymère, des additifs de stabilisation contre les dommages provoqués par la lumière, la chaleur et les rayonnements de haute énergie, des agents de renfort minéraux et organiques et des colorants, sont utilisés en tant qu'adjuvants et additifs.

9. Procédé selon la revendication 8, caractérisé en ce que les agents de finissage sont des composés du type contenant un composant non-ionique et un groupe aliphatique fluoré ; des polysiloxanes, en particulier les polyorganooxysiloxanes à deux parties, dans lesquels une partie contient au moins un groupe disiloxanyle tétrasubstitué associé à un ou plusieurs groupes silyle et siloxy trisubstitués, les substituants étant indépendamment choisis parmi les groupes alkyle, cycloalkyle, aryle et hétérocycliques monovalents, et l'autre partie est un groupe contenant un oxyalkylène à longue chaîne ; des composés partiellement fluorés, des composés de type acide gras et amide gras ayant des propriétés lubrifiantes.

10. Procédé selon la revendication 8, caractérisé en ce que les additifs de stabilisation sont du type des antioxydants cycliques de type amine encombrée, ou des polysiloxanes, dont l'autre partie est un groupe pipéridyle contenant un fragment stabilisant vis-à-vis d'une dégradation.

11. Procédé selon la revendication 8, caractérisé en ce que la concentration des additifs et adjuvants est telle que la limite de solubilité de la plage opérationnelle du procédé de régulation soit dépassée, et de préférence de 0,01 à 5, tout spécialement de 0,01 à 2 % en poids par rapport au poids du polymère.

12. Procédé selon la revendication 1, caractérisé en ce que les polymères utilisés sont des polyoléfines et/ou des mélanges d'homopolymères et des copolymères de polyoléfines.

13. Procédé selon les revendications 1 à 7, caractérisé en ce que le traitement thermique pour conférer des changements structurels après l'étape de filage à l'état fondu et d'étirage sont réalisés sur des étoffes non tissées faites de fibres.

14. Procédé selon la revendication 13, caractérisé en ce que les étoffes non tissées sont faites de fibres utilisant une technique conventionnelle de thermocollage, de collage à l'état filé, de soufflage à l'état fondu ou d'aiguilletage par jet d'eau.

15. Procédé selon les revendications 1 à 14, caractérisé en ce qu'un polymère fibreux, qui est orienté par filage à l'état fondu et légèrement orienté par étirage et qui contient un ou plusieurs agents de finissage, est traité thermiquement sous la forme d'une étoffe non tissée à une température située dans la plage $\vartheta$ = 80 - 130°C, le temps de séjour étant d'au moins une seconde.

16. Procédé selon la revendication 15, caractérisé en ce que la fibre est finie avec un agent de finissage extérieur conventionnel qui est éliminé de la surface des fibres dans les processus de cardage et de collage.

17. Procédé selon les revendications 1 à 14, caractérisé en ce que le traitement thermique pour le thermocollage d'une fibre sphérulitique d'un polymère qui est stabilisé vis-à-vis d'une oxydation induite par une lumière autogène ou une énergie thermique et qui a été rapidement trempé lors du filage à une basse température, et qui a subi une orientation par filage, qui est non étiré ou qui est légèrement étiré et qui a un faible degré de cristallinité et une faible épaisseur lamellaire de cristal, est mis en oeuvre à une température située dans la plage $\vartheta$ = 80 - 150°C, le temps de séjour pour le traitement thermique étant t = $10^{-3}$ - $10^{-4}$ s.

18. Procédé selon la revendication 17, caractérisé en ce qu'un polymère qui doit être thermocollé à une température de collage élevée et soumis à un cisaillement rapide est stabilisé, en plus d'être stabilisé par une base, au moyen d'un antioxydant du type amine encombrée, par utilisation d'une quantité qui est 3 à 6 fois celle de la stabilisation par une base, la concentration de stabilisation étant située dans la plage allant de 0,1 à 0,5 % en poids.

19. Procédé selon les revendications 1 à 14, caractérisé en ce qu'une fibre obtenue par filage, orientée par filage et ayant une structure smectique amorphe, qui est stabilisée contre un dommage dû à un rayonnement de haute énergie avec des additifs bien connus du type amine encombrée, est collée et traitement thermiquement sous la forme d'une étoffe non tissée à une température située dans la plage $\vartheta$ = 80 - 150°C pendant un temps de l'ordre de $10^{-4}$ à $10^{-2}$ s.

20. Procédé selon les revendications 1 à 14, caractérisé en ce que les polymères en fibres contenant des additifs non réactifs jouant le rôle de revêtement, d'écran à la lumière, d'agent de renforcement, sont rapidement trempés lors du filage, orientés par filage et, si nécessaire, traités par étirage et thermiquement de façon isométrique sous la forme d'une fibre ou sous la forme d'une étoffe non tissée à une température située dans la plage allant de 80 à 150°C, le temps de séjour étant d'au moins $10^{-4}$ s.

Fig.2 High-pressure Hydraulic Entanglement Production Line

Fig.1 PP Staple Fibre Procesing Line – pilot scale –

**EP 0 753 606 B1**

Fig.3    Water Jet Needling Station

31

Fig. 4   Amorphous thickness versus temperature

Fig. 5 Receding contact angles versus temperature

Fig. 6 Receding contact angles versus temperature

EP 0 753 606 B1

Fig. 7 Receding contact angles versus temperature

Fig. 8 Advancing contact angles versus temperature

EP 0 753 606 B1